# EUROPÄISCHE PATENTSCHRIFT

(11) **EP 2 390 656 B1**
(45) Veröffentlichungstag und Bekanntmachung des Hinweises auf die Patenterteilung: **23.09.2015**
(21) Anmeldenummer: 10180291.6
(22) Anmeldetag: 27.09.2010
(51) Int. Cl.: G01N 21/88, G01N 21/89, G01N 21/896

(54) **Einrichtung und Verfahren zur optischen Überprüfung**
Device and method for optical inspection
Dispositif et procédé de vérification optique

(30) Priorität: 28.05.2010 DE 102010021853
(43) Veröffentlichungstag der Anmeldung: 30.11.2011
(73) Patentinhaber: ISRA Vision AG, 64297 Darmstadt (DE)
(72) Erfinder: Dr. Leute, Stefan, 45699 Herten (DE); Dr. Kubiak, Rolf, 44629 Dortmund (DE)
(74) Vertreter: Keil & Schaafhausen Patent- und Rechtsanwälte

(56) Entgegenhaltungen:
- EP-A1- 1 030 173
- EP-A1- 1 742 041
- DE-A1- 10 063 293
- DE-A1- 19 813 072
- DE-A1- 19 813 073
- DE-A1- 19 946 520
- DE-B3-102004 014 532
- US-A1- 2010 103 661

## Beschreibung

Die Erfindung betrifft eine Einrichtung und ein Verfahren zur optischen Überprüfung eines in einer Transportrichtung bewegten Gegenstands auf Fehler. Der. Gegenstand kann insbesondere aus einem transparenten Material wie Glas oder Strukturglas, beispielsweise eine Glasscheibe oder ein Glasband, aber auch aus nicht transparentem Material bestehen und beispielsweise eine lackierte Oberfläche aufweisen. Die Fehler können insbesondere Beschädigungen auf der Oberfläche, beispielsweise Kratzer, und/oder bei transparentem Material Einschlüsse im Inneren des transparenten Materials, beispielsweise Lufteinschlüsse oder Staub, sein.

Aus der Druckschrift DE 100 63 293 A1 ist ein Verfahren und eine Vorrichtung zur mehrkanaligen Inspektion von Oberflächen im Durchlauf bekannt, welche eine erste Lichtquelle und eine zweite Lichtquelle sowie eine Farbzeilenkamera aufweist. Die Lichtquellen sowie die Zeilenkamera werden dazu verwendet, mehrere Informationskanäle zu der Oberfläche aufzunehmen, wie z.B. Farb- und Höheninformationen. Dazu werden die Lichtquellen synchron mit der Zeilenfrequenz der Zeilenkamera gepulst.

Die Druckschriften EP 1 742 041 A1 und EP 1 030 173 A1 offenbaren Verfahren und entsprechende Vorrichtungen zur Oberflächeninspektion bewegter Produkte. Hierbei wird die zu prüfende bewegte Oberfläche mit mindestens einer Kamera bildhaft erfasst. Ferner ist eine Beleuchtungskonfiguration vorgesehen, bei der selektiv einzeln oder mehrere Lichtquellen aus einer Anzahl von in Transportrichtung hintereinander angeordneten Lichtquellen aktiviert oder deaktiviert werden. Die hieraus resultierenden Einzelbilder werden zur Erkennung von Defekten auf der Oberfläche ausgewertet.

Die Druckschrift DE 198 13 073 A1 beschäftigt sich mit der Bestimmung der optischen Qualität von Flachglas. Hierfür ist eine Farb-Zeilenkamera vorgesehen, welche eine Beleuchtung durch das Glas oder in Reflektion betrachtet. Der Fokus der Kamera befindet sich dabei auf der Ebene des Glases. Die quer zur Transportrichtung angeordnete Beleuchtung weist ein Muster auf, dessen Teilabschnitte im Wechsel zwei unterschiedliche Farben aufweisen (z.B. rot, grün). Die Kamera beobachtet die durch unterschiedliche Teilabschnitte der Beleuchtung beleuchteten Felder des Glases. Die Kamera ermittelt daraus ein Videosignal mit einem von der Position des Betrachtungsquadrats abhängigen Spannungsverlauf, der zur Qualitätsanalyse ausgewertet wird.

Schließlich wird in der Druckschrift US 2010/0103661 A1 ein Inspektionssystem offenbart, das eine Lichtquelle mit einer Vielzahl von bogenförmig angeordneten LED-Zeilen aufweist, welche sich quer zur Transportrichtung erstreckten. Hierdurch wird eine besonders hohe und gleichmäßige Leuchtdichte erreicht.

Die erfindungsgemäße Einrichtung weist eine Beleuchtungseinrichtung zur Beleuchtung des bewegten Gegenstands insbesondere zur Erzeugung eines Hellfelds oder eines Dunkelfelds, eine optische Aufnahmeeinrichtung zur Aufnahme von Bildern der insbesondere als Hellfeld oder als Dunkelfeld beleuchteten Bereiche des Gegenstands sowie eine Recheneinheit zur Ansteuerung der Beleuchtungseinrichtung und der Aufnahmeeinrichtung und zur Auswertung der aufgenommenen Bilder auf das Vorhandensein von Fehlern auf. Die optische Aufnahmeeinrichtung kann erfindungsgemäß insbesondere eine Zeilenkamera mit genau einer Zeile von nebeneinander angeordneten Bildaufnahmeelementen sein, beispielsweise eine CCD-Zeilenkamera mit einer Zeile von fotosensitiven Elementen, welche Zeile vorzugsweise quer zur Transportrichtung des Gegenstands ausgerichtet ist. Gegebenenfalls kann die optische Aufnahmeeinrichtung aber auch eine Flächenkamera sein, beispielsweise eine CCD-Kamera, mit mehreren nebeneinander angeordneten Zeilen von fotosensitiven Elementen sein, d.h. eine Matrixanordnung von fotosensitiven Elementen.

Bei der optischen Inspektion von transparenten oder reflektierenden Materialien, wie beispielsweise Glas oder Strukturglas, mit Kameras als optischen Aufnahmeeinrichtungen ergibt sich das Problem, dass zur Kontrastierung der verschiedenen Fehlerarten sowohl eine Hellfeld- als auch eine Dunkelfeldbeleuchtung benötigt wird, da verschiedene Fehlerarten häufig nur in der einen oder der anderen Beleuchtung durch die Kameras selektiert werden können.

So kann man absorbierende Fehler, wie beispielsweise Einschlüsse, in der Hellfeldbeleuchtung erkennen, in der transparentes Material von der Beleuchtungseinrichtung durchleuchtet wird und die Kamera auf der anderen Seite des transparenten Materials angeordnet ist. Streuende oder ablenkende Fehler, wie beispielsweise Kratzer, werden dagegen in einer Dunkelfeldbeleuchtung festgestellt. Bei der Dunkelfeldbeleuchtung wird ein eigentlich neben dem Aufnahmebereich der Kamera liegender Bereich mit Licht beleuchtet, so dass die Kamera im Idealfall ohne Fehler auf der Oberfläche ein dunkles Feld sieht. Sofern sich Fehler auf der Oberfläche befinden, werden durch diese Fehler jedoch Licht in das Bild der Kamera abgelenkt und die Fehler auf diese Weise festgestellt. In diesem Fall spricht man auch von einer Beleuchtung mit einem Dunkelfeld.

Bei transparenten Materialien wird daher meist eine Durchlichtanordnung, manchmal aus Zugänglichkeitsgründen auch eine Auflichtanordnung verwendet. Bei nicht transparenten Materialien muss immer eine Auflichtanordnung verwendet werden. Die Erfindung bezieht sich sowohl auf eine Auflicht- als auch auf eine Durchlichtanordnung.

Bei einer Hellfeldbeleuchtung sieht die optische Aufnahmeeinrichtung bzw. Kamera auf ein beleuchtetes Feld, in der Durchlichtanordnung durch das transparente Material hindurch auch direkt in die Beleuchtungseinrichtung. In dem hellen Feld bilden sich Fehler als kontrastierte Bereiche ab.

Bei einer Dunkelfeldbeleuchtung schaut die optische Aufnahmeeinrichtung bzw. Kamera im fehlerfreien Fall neben die Beleuchtung ins Dunkle und sieht somit nichts. Bei Auftreten eines Fehlers wird dagegen von dem Fehler in die Kamera abgelenktes Licht detektiert. Dabei sind die Beleuchtungsrichtung und der laterale Abstand der Beleuchtung zum Fehler als Parameter wichtig. Der laterale Abstand der Beleuchtung von dem Fehler darf nicht zu groß sein, weil die Ablenkung des Lichts durch den Fehler dann nicht ausreichen würde, um für eine Fehlerdetektion genügend Licht in die Kamera zu streuen. Typischerweise darf der Abstand nicht größer als einige Millimeter sein.

Viele dieser eine Ablenkung des Lichtes bewirkende Fehler lenken das Licht zudem nur in bestimmte Richtungen ab. So lenken beispielsweise Kratzer nur quer zu ihrer Verlaufsrichtung ab. Um diese Fehler mit der Kamera zu detektieren, muss die Beleuchtung daher in Ablenkungsrichtung neben dem Fehler liegen. Eine Beleuchtung, die aus der orthogonal zu der Ablenkungsrichtung liegenden Richtung einstrahlt, wird nicht in die Kamera reflektiert und ist daher zur Kontrastierung dieses Fehlers ungeeignet. Je besser die Beleuchtung in Ablenkungsrichtung angeordnet ist, desto wirksamer ist sie zur Kontaktierung eines solchen Fehlers.

Die Einhaltung dieser Bedingungen für eine Dunkelfeldbeleuchtung ist bei Online-Überwachungseinrichtungen während der Herstellung beispielsweise eines langen Bandes aus Glas schwierig. Wegen der geforderten hohen Auflösung lassen sich derartige Bedingungen in wirtschaftlich vertretbarem Rahmen nur erreichen, wenn der durch die optischen Aufnahmeeinrichtungen bzw. Kameras abgedeckte Inspektionsbereich als Streifen quer zur Transportrichtung des (theoretisch unendlich) langen Bandes realisiert wird und sich das Band bzw. der zu überprüfende Gegenstand durch diesen Inspektionsbereich hindurch bewegt. Dazu werden bevorzugt Zeilenkameras, ggf. aber auch Flächenkameras verwendet.

Um die gesamte Breite des bewegten Gegenstandes, beispielsweise des Glasbandes, mit der gewünschten räumlichen Auflösung abzudecken, ist es gegebenenfalls notwendig, mehrere optische Aufnahmeeinrichtungen bzw. Kameras nebeneinander anzuordnen, die dann eine sogenannte "Kamerabank" bilden. Zusammen mit der den Kameras der Kamerabank zugeordneten Beleuchtungseinrichtungen bildet diese Kamerabank einen sogenannten "Kamera- und Beleuchtungskanal".

Grundsätzlich können gerade bei transparenten Materialien sowohl absorbierende als auch ablenkende Fehler jeder Art vorkommen. Aufgrund des Transports und der Bewegung des Gegenstandes ist eine weitere, häufig vorkommende Fehlerart ein Kratzer in Transportrichtung. Da feine Kratzer fast nur in einer Dunkelfeldbeleuchtung erkennbar sind, ist eine solche Beleuchtung unbedingt notwendig. Das Licht dafür muss zu einem erheblichen Anteil aus einer Richtung quer zur Transportrichtung kommen, um die häufig in Transportrichtung entstehenden Kratzer im Dunkelfeld geeignet zu beleuchten, und jeden Bereich des bewegten Gegenstands, beispielsweise des Glasbandes, aus geringer Entfernung beleuchten. Dies ist gerätetechnisch aufwendig.

Aus den obigen Erläuterungen geht hervor, dass bei der optischen Inspektion von transparenten oder reflektierenden Materialien, wie z.B. Glas oder Strukturglas das Problem entsteht, dass man zur sicheren Erkennung aller möglichen Fehler mehrere verschiedene Kamera-Beleuchtungsanordnungen benötigt, da verschiedene Fehlerarten nur mit der einen oder der anderen Anordnung zu sehen sind. Außerdem ist es oft notwendig, die Fehler nicht nur zu erkennen, sondern den jeweils gefundenen Fehler auch nach dem detektierten Fehlertyp zu klassifizieren und somit voneinander zu unterscheiden. Hierfür genügt oft die Information, die man aus einer Kamera-Beleuchtungsanordnung erhält, nicht. So können z.B. optisch ablenkende Fehler im Glas nur erkannt werden, wenn durch das Glas hindurch auf ein Muster geschaut wird, dessen Verzerrung durch die Kamera aufgenommen wird. Fehler in der Reflexionsoptik des Glases können demgegenüber nur erkannt werden, wenn über die Glasoberfläche als Spiegel in ein Muster geschaut wird. Da die beiden in diesem Abschnitt beschriebenen Vorgehensweisen völlig verschiedene Eigenschaften des Glases betreffen, werden diese Fehler bislang durch zwei separate Kamera- und Beleuchtungskanäle erfasst.

Ein weiteres Beispiel betrifft die Unterscheidung von offenen (d.h. zu der Glasoberfläche hin offenen) Blasen und geschlossenen (d.h. vollständig innerhalb des Glases liegenden) Blasen. Sowohl offene als auch geschlossene Blasen sind z.B. in einer Durchlichtanordnung gut zu erkennen. Allerdings sind sie schlecht zu unterscheiden. Die Unterscheidung der beiden Blasentypen ist jedoch häufig wichtig, da in vielen Fällen offene Blasen anders als geschlossene Blasen behandelt werden. Eine Unterscheidung der beiden Blasentypen kann beispielsweise dadurch erreicht werden, dass die Glasoberfläche zusätzlich in einer Reflexionsbeleuchtung betrachtet wird. In Reflexion erkennt man die offenen Blasen ebenfalls, die geschlossenen Blasen jedoch nicht.

Aus der WO 2005/116616 A1 sind eine Vorrichtung und ein Verfahren zur Detektion von Kratzern auf einer Glasscheibe mit einer Beleuchtungseinrichtung und einer Aufnahmeeinrichtung bekannt, die eine Scanlinie auf der Materialoberfläche erfassen, wobei die Glasscheibe an der Aufnahme- und Beleuchtungseinrichtung vorbeibewegt werden kann. Um Kratzer in jede Richtung erkennen zu können, weist die Beleuchtungseinrichtung eine Lichtleiste auf, die ein quer zur Scanlinie paralleles, in Richtung der Scanlinie diffuses Licht erzeugt, sowie eine weitere Lichtleiste, die ein quer zur Scanlinie diffuses Licht erzeugt. Dadurch wird die Glasoberfläche von allen Seiten ausreichend gleichmäßig beleuchtet. Gegenüber der Aufnahmeeinrichtung ist auf der anderen Seite der Glasscheibe eine Lichtfalle ausgebildet. Dieses System ist hervorragend für eine Kratzerdetektion geeignet. Allerdings lassen sich andere Glasfehler, insbesondere Einschlüsse, durch dieses System nicht zuverlässig feststellen. Ferner ist das Ausbilden der Beleuchtungseinheit aufwendig und erfordert viel Bauraum, der in modernen Produktionsstraßen teilweise nicht mehr zur Verfügung steht.

In der US 3,814,946 wird ein Verfahren zur Detektion von Fehlern in transparentem Material vorgeschlagen, bei der zwei Lichtquellen auf verschiedenen Seiten des Materials angeordnet sind, die zusammen mit der Kamera erste und zweite optische Systeme bilden, um sowohl Einschlüsse als auch Kratzer in bzw. auf dem transparenten Material festzustellen. Die beiden Lichtquellen sind gleichzeitig aktiv. Dadurch erhält man eine Überlagerung beider Bilder in einem, welches eine schlechte Bildqualität bedingt. Ferner beeinflussen sich die beiden Lichtquellen gegenseitig. Außerdem ist die bekannte Methode auf sehr wenige Möglichkeiten der Anordnung der Lichtquellen beschränkt. Durch die beiden verschiedenen Lichtquellen ist das System zudem sehr aufwendig und erfordert erheblichen Bauraum. Auch ist die Auswertung fehleranfällig. Eine zuverlässige Online-Auswertung ist nicht möglich.

Die US 5,598,262 offenbart ein Verfahren zur Inspektion eines transparenten Materials, bei dem eine Kamera auf das transparente Material blickt und der Hintergrund hinter dem transparenten Material beleuchtet wird. Ferner wird die Materialoberfläche seitlich beleuchtet, um in dem Material eingeschlossene Fehler von auf der Materialoberfläche abgelagerten und das seitliche Licht beugenden Fehlern unterscheiden zu können. Während einer Bewegung des transparenten Materials wird eine Folge kontrastreicher Bilder aufgenommen, um Einschlüsse in dem transparenten Material zu erkennen. Diese Art der Beleuchtung ist sehr aufwendig und teuer. Außerdem ist das Verfahren nicht onlinefähig, d.h. nicht geeignet, große Glasscheiben während der Produktion zu überwachen, da jeweils eine Folge von Bildern aufgenommen und das Wandern eines Fehlers ausgewertet werden muss.

Bisher wurde eine Hellfeld- und Dunkelfeldanalyse von Fehlern oder eine Fehlerdetektion von verschiedenen Seiten des Gegenstands meist dadurch erreicht, dass für jede Kamera- und Beleuchtungskonfiguration eigene Kamera- und Beleuchtungskanäle aufgebaut wurden, beispielsweise einen sogenannten "Dunkelfeldkanal", bei dem die Kameras der Kamerabank neben eine Beleuchtung oder ein beleuchtetes Feld schauen, und einen sogenannten "Hellfeldkanal", bei dem die Kameras einer Kamerabank in eine Beleuchtung bzw. ein beleuchtetes Feld schauen, je nachdem ob eine Auflicht- oder eine Durchlichtanordnung gewählt wurde.

Eine seitliche Dunkelfeldbeleuchtung aus geringem lateralen Abstand wurde meist erreicht, indem möglichst kurze längliche Beleuchtungskörper, in der Regel kurze Leuchtstoffröhren, in einem geringen Abstand und um 45° gegenüber der Transportrichtung verdreht nebeneinander über die gesamte Breite der Bahn angeordnet wurden.

Diese Vorgehensweise hat jedoch mehrere Nachteile. Für eine Hellfeldbeleuchtung und eine dazu separate Dunkelfeldbeleuchtung, ggf. von verschiedenen Seiten des Gegenstands oder unter verschiedenen Winkeln zum Gegenstand benötigt man zwei oder mehr Kamerabänke und zwei oder mehr verschiedene Beleuchtungseinrichtungen mit entsprechend hohem gerätetechnischem Aufwand. Ferner werden zwei Einbaustellen in einer Produktionslinie benötigt, was häufig zu Platzproblemen führt. Insgesamt sind derartige System kostenintensiv.

Da an zwei oder mehr verschiedenen Orten installierten Kamera- und Beleuchtungskanälen die Inspektion an verschiedenen Orten stattfindet, müssen die einzelnen Inspektionsergebnisse nachträglich zusammengeführt werden. Dies führt zu einem zusätzlichen Rechenaufwand und zu Ungenauigkeiten, da jede Fehlerposition mit einem gewissen Fehler behaftet ist.

Auch sind die kürzesten, kommerziell verfügbaren Leuchtstoffröhren wesentlich länger, als sie für die Realisierung einer geeigneten Beleuchtungseinrichtung sowohl für das Hell- als auch für das Dunkelfeld notwendig wären. Auch hierdurch wird mehr Bauraum benötigt, als es für die Kamerabank unter technischen Gesichtspunkten eigentlich nötig ist.

Aufgabe der Erfindung ist es daher, alle zur optischen Überprüfung eines in einer Transportrichtung bewegten Gegenstands notwendigen Kamera- und Beleuchtungskonfigurationen zu vereinfachen und kostengünstiger zu gestalten.

Diese Aufgabe wird erfindungsgemäß mit einer Einrichtung gemäß Anspruch 1 und einem Verfahren gemäß Anspruch 9 gelöst.

Bei der eingangs erwähnten Einrichtung ist vorgesehen, dass die Recheneinheit dazu eingerichtet ist, die Aufnahmefrequenz für die Aufnahmeeinrichtung derart zu wählen, dass die Aufnahmeeinrichtung in einem der gewünschten Auflösung in Transportrichtung entsprechenden Auflösungsbereich des Gegenstands mehrere Aufnahmen, d.h. mindestens zwei Aufnahmen, macht. Dies führt bei einer fest installierten Beleuchtung dazu, dass verschiedene Beleuchtungssituationen in dem Auflösungsbereich erfasst werden, sofern der durch die Aufnahmeeinrichtung erfasste Bereich groß genug ist, d.h. nicht nur der unmittelbar angestrahlte Bereich eines Hellfeldes bzw. der Dunkelbereich eines Dunkelfeldes, sondern auch ein daneben liegender Bereich mit erfasst wird.

In dieser einfachen Ausführungsform wird daher bevorzugt eine Flächen- bzw. Matrixkamera eingesetzt, die aufgelöst einen größeren Flächenbereich auf dem Gegenstand abdecken kann. Abhängig von den geometrischen Verhältnissen und der Einrichtung der Beleuchtungseinrichtung können auf diese Art und Weise gleichzeitig eine Hellfeldbeleuchtung, eine Dunkelfeldbeleuchtung, eine Beleuchtung von verschiedenen Seiten des Gegenstands (d.h. von oben oder von unten), eine Beleuchtung unter verschiedenen Winkeln und/oder eine Beleuchtung mit Licht unterschiedlicher Wellenlänge für den Auflösungsbereich umgesetzt werden. Hierbei werden die von dem Auflösungsbereich erzeugten Aufnahmen der Aufnahmeeinrichtung ggf. auseinander genommen und zu den gewünschen Bildern, z.B. einem Hellfeldbild, einem Dunkelfeldbild, einem Reflexionsbild oder einem Transmissionsbild, zusammengesetzt.

Entsprechend ist es bevorzugt, wenn die Recheneinheit dazu eingerichtet ist, aus den in dem Auflösungsbereich des Gegenstands erstellten mehreren Aufnahmen mindestens zwei Bilder des Gegenstands zusammenzusetzen und einzeln oder kombiniert auf das Vorhandensein von Fehlern auszuwerten. Hierbei werden die mindestens zwei Bilder aus den entsprechenden Aufnahmen eines Teils der Auflösungsbereiche oder aller Auflösungsbereiche des Gegenstands zusammengesetzt. Beispielsweise werden ein Hellfeldbild und ein Dunkelfeldbild des Gegenstands oder ein Reflexionsbild und ein Transmissionsbild des Gegenstands zusammengesetzt. Diese Bilder können dann durch die Recheneinheit einzeln oder in Kombination zur Lage- und Ausdehnungsbestimmung des Fehlers und/oder zur Bestimmung des Fehlertyps ausgewertet werden. Beispielsweise können aus der kombinierten Auswertung von Reflexionsbild und Transmissionsbild offene und geschlossene Blasen in einem Glas unterschieden werden.

Es hat sich herausgestellt, dass bei einer vorteilhaften Einrichtung gemäß der vorliegenden Erfindung die Recheneinheit dazu eingerichtet sein kann, die Aufnahmeeinrichtung derart anzusteuern, dass in dem Auflösungsbereich drei, vier, fünf oder sechs Aufnahmen gemacht werden. Dies bedeutet, dass der Auflösungsbereich durch insgesamt drei, vier, fünf oder sechs Bilder abgebildet wird, wobei jedes Bild den Gegenstand auf unterschiedliche Weise aufnimmt. Grundsätzlich können im Rahmen der Erfindung natürlich auch mehr Aufnahmen gemacht werden. Die durch die Aufnahmen abgedeckten Bereiche des Gegenstands können vollständig voneinander getrennt oder miteinander überlappend ausgebildet sein. Bei dem Einsatz einer Zeilenkamera entspricht jedes Bild einer Bildzeile der Kamera, die vorzugsweise nur den beleuchteten Bereich des Gegenstands oder einen Teil davon erfasst.

In diesem Fall, d.h. bei Verwendung einer Zeilenkamera mit vorzugsweise genau einer Kamerazeile, aber auch unabhängig davon, wird gemäß einer besonders bevorzugten Ausführungsform vorgeschlagen, dass die Beleuchtungseinrichtung mehrere einzeln schaltbare Beleuchtungselemente, beispielsweise Licht emittierende Dioden (LED) oder Gruppen von gemeinsam schaltbaren Licht emittierenden Dioden (LED's), aufweist. Ein einzeln schaltbares Beleuchtungselement kann also aus einem Beleuchtungskörper, bspw. einer LED, oder mehreren in einer Gruppe zusammengefassten und gemeinsam schaltbaren Beleuchtungskörpern, bspw. einer Gruppe von mehreren LED's, aufgebaut sein. Vorzugsweise ist die Recheneinheit bei diesem Aufbau der Beleuchtungseinrichtung dazu eingerichtet, die einzelnen Beleuchtungselemente für die mehreren Aufnahmen in dem einen Auflösungsbereich unterschiedlich anzusteuern, d.h. an- und auszuschalten. Hierdurch lassen sich flexibel verschiedene Beleuchtungskonfigurationen, beispielsweise von der gleichen Seite des Gegenstands, von verschiedenen Seiten des Gegenstands, unter verschiedenen Winkeln zu dem Gegenstand und/oder mit Licht unterschiedlicher Wellenlänge, erreichen, so dass aufgrund der flexibel schaltbaren Beleuchtungseinrichtung in dieser Konfiguration mehrere Aufnahmen in einem Auflösungsbereich mit den jeweils gewünschten Beleuchtungs- und Aufnahmekonditionen erreichbar sind.

Für eine erfindungsgemäß unterschiedliche Ansteuerung der Beleuchtungselemente der Beleuchtungseinrichtung für die mehreren Aufnahmen innerhalb des einen Auflösungsbereichs ist es insbesondere ausreichend, wenn in der Gesamtheit der Beleuchtungselemente ein unterschiedliches Muster der Beleuchtungseinrichtung erreicht wird. Es ist nicht notwendigerweise so, dass bei jeder Ansteuerung für jede der verschiedenen Aufnahmen jedes Beleuchtungselement der Beleuchtungseinrichtung anders als bei den bzw. der vorangegangenen Aufnahme(n) angesteuert werden muss. In dieser Konfiguration können also gezielt verschiedene Beleuchtungskanäle, insbesondere als Hellfeld- oder Dunkelfeldbeleuchtung, als Beleuchtung von unterschiedlichen Seiten des Gegenstands und/oder als Beleuchtung mit Licht unterschiedlicher Wellenlänge, an dem Platz einer Kamera bzw. einer Aufnahmeeinrichtung realisiert werden.

In einer besonders platzsparenden Ausführung einer derartigen Einrichtung sind die Beleuchtungselemente der Beleuchtungseinrichtung in genau einer quer zur Transportrichtung ausgerichteten Beleuchtungszeile angeordnet, wobei die Recheneinheit dazu eingerichtet ist, die Beleuchtungselemente in der Beleuchtungszeile gemäß einem vorgegebenen und erfindungsgemäß auch vorgebbaren, d.h. einstellbaren, Beleuchtungszyklus anzusteuern. Vorzugsweise entsprechen die Anzahl der Ansteuerungen des Beleuchtungszyklus gerade der Anzahl der Aufnahmen in dem vorgesehenen Auflösungsbereich, d.h. der Beleuchtungszyklus wird erfindungsgemäß derart gewählt, dass der Beleuchtungszyklus dann einmal durchgeführt bzw. abgearbeitet wurde, wenn der Gegenstand in Transportrichtung um die gewünschte Auflösung weitertransportiert ist. Bei drei, vier, fünf oder sechs Aufnahmen in dem Auflösungsbereich wird die Beleuchtungszeile also entsprechend drei-, vier-, fünf- oder sechsmal in einem Beleuchtungszyklus angesteuert. Entsprechendes gilt bei mehr Aufnahmen.

In einer möglichen, vorteilhaften Ausführungsform kann die Recheneinheit dazu eingerichtet sein, die Beleuchtungszeile in einem Beleuchtungszyklus dreimal anzusteuern, wobei bei einer ersten Ansteuerung die in der Nummerierung geraden Beleuchtungselemente der Beleuchtungszeile, d.h. die Elemente 2, 4, 6 usw., bei einer zweiten Ansteuerung die jeweils ungeraden Beleuchtungselemente, d.h. die Elemente 1, 3, 5 usw. und in einer dritten Ansteuerung alle Beleuchtungselemente angeschaltet werden. Die in der ersten und zweiten Ansteuerung nicht angeschalteten Beleuchtungselemente werden ausgeschaltet, d.h. bleiben zur Bildung eines Dunkelfelds dunkel. Bei der Ansteuerung aller Beleuchtungselemente (dritte Ansteuerung) können die Beleuchtungselemente vorzugsweise mit verminderter Helligkeit zur Vermeidung einer Überstrahlung angesteuert werden (Hellfeldbeleuchtung). Auch die Reihenfolge der ersten, zweiten und dritten Ansteuerung ist nicht fest vorgegeben, sondern kann verändert werden. Entsprechende Anmerkungen gelten jeweils auch für die nachfolgend beschriebenen, konkreten Beleuchtungszyklen, die jeweils aufeinander abgestimmte Hell- und Dunkelfeldbeleuchtungen realisieren.

Durch die zuvor beschriebene, schachbrettartige Ausleuchtung wird jeder Punkt im Auflösungsbereich einmal in Dunkelfeld mit einer senkrecht zur Bewegungsrichtung verlaufenden Ausleuchtung, d.h. quer zur Transportrichtung, beleuchtet (erste und zweite Ansteuerung). Eine Hellfeldbeleuchtung erfolgt dann gleichzeitig für alle Bereiche über die gesamte abgedeckte Breite bei der dritten Ansteuerung.

Da eine Dunkelfeldbeleuchtung jedoch nicht unmittelbar beim Übergang eines beleuchteten zu einem unbeleuchteten Beleuchtungselement eintritt, kann es erfindungsgemäß vorteilhaft sein, insgesamt mehrere ausgeschaltete, d.h. dunkle Beleuchtungselemente nebeneinander zu kombinieren und innerhalb eines Auflösungsbereichs über die gesamte Breite des zu untersuchenden Gegenstands zu verschieben. In einer konkreten Ausführung kann dazu vorgesehen sein, dass die Recheneinheit dazu eingerichtet ist, die Beleuchtungszeile in einem Beleuchtungszyklus insgesamt fünfmal anzusteuern, wobei bei einer ersten, zweiten, dritten und vierten Ansteuerung jeweils zwei aufeinanderfolgende Beleuchtungselemente angeschaltet und zwei den angeschalteten Beleuchtungselementen folgende Beleuchtungselemente der Beleuchtungszeile ausgeschaltet werden. Die erste, zweite, dritte und vierte Ansteuerung ist dabei jeweils um ein Beleuchtungselement in der Beleuchtungszeile versetzt, wobei die Versetzung auch bei den nachfolgend erläuterten Beispielen immer in die gleiche Richtung betrachtet wird, so dass die angeschalteten und ausgeschalteten Beleuchtungselemente innerhalb eines Auflösungsbereichs über die gesamte Breite des Gegenstands wandern. Bei einer fünften Ansteuerung werden dann alle Beleuchtungselemente, gegebenenfalls mit der bereits erwähnten verminderten Helligkeit, angeschaltet, um ein Hellfeld zu realisieren. Vorzugsweise folgen dabei die erste, zweite, dritte und vierte Ansteuerung aufeinander, wobei von einer zur nächsten Ansteuerung jeweils ein Versatz von nur einem Beleuchtungselement in der Beleuchtungszeile erfolgt. Dies ist jedoch nicht zwangsläufig notwendig.

Ein ähnlicher Effekt lässt sich erreichen, wenn die Recheneinheit dazu eingerichtet ist, die Beleuchtungszeile in einem Beleuchtungszyklus insgesamt viermal anzusteuern, wobei bei einer ersten, zweiten und dritten Ansteuerung jeweils ein Beleuchtungselement angeschaltet und zwei dem angeschalteten Beleuchtungselement folgende Beleuchtungselemente ausgeschaltet sind. Wiederum sind die erste, zweite und dritte Ansteuerung jeweils um ein Beleuchtungselement versetzt, wobei die Reihenfolge der ersten, zweiten und dritten Ansteuerung gegebenenfalls auch variiert werden kann. Bei der vierten Ansteuerung werden alle Beleuchtungselemente zur Erzeugung eines Hellfeldes in der vorbeschriebenen Weise angeschaltet.

Diese Anordnung entspricht dem zuvor beschriebenen Beleuchtungszyklus, wobei eine vollständige Abdeckung der gesamten Breite des Gegenstands und eine entsprechende Wiederholung bereits nach drei Ansteuerungen eintreten.

Um ein größeres Dunkelfeld zu erreichen, kann gemäß einer weiteren Ausführungsform der erfindungsgemäßen Einrichtung die Recheneinheit dazu eingerichtet sein, die Beleuchtungszeile in einem Beleuchtungszyklus dreimal anzusteuern, wobei bei einer ersten und zweiten Ansteuerung jeweils ein Beleuchtungselement angeschaltet ist und drei dem angeschalteten Beleuchtungselement folgende Beleuchtungselemente ausgeschaltet sind. Auch hier sind die erste und zweite Ansteuerung um ein Beleuchtungselement versetzt, um die gesamte Breite der Beleuchtungseinrichtung mit einer Dunkelfeldbeleuchtung zu beleuchten. Der hier vorgeschlagene Beleuchtungszyklus ist zwar nicht ganz symmetrisch aufgebaut, deckt jedoch die gesamte Breite des zu überprüfenden Gegenstands mit einer Dunkelfeldbeleuchtung ab und kann mit bereits drei Beleuchtungszyklen realisiert werden, so dass diese Ausführungsform bei einer hohen Transportgeschwindigkeit vorteilhaft eingesetzt werden kann. Eine symmetrische Dunkelfeldbeleuchtung ließe sich entsprechend durch eine fünfmalige Ansteuerung erreichen, wobei die ersten vier Ansteuerungen das angeschaltete Beleuchtungselement jeweils um eine Position verschieben.

Eine besonders zeitsparende Anordnung wird dadurch erreicht, dass die Recheneinheit dazu eingerichtet ist, die Beleuchtungszeile in einem Beleuchtungszyklus viermal anzusteuern, wobei bei einer ersten, zweiten, dritten und vierten Ansteuerung jeweils ein Beleuchtungselement angeschaltet und drei dem angeschalteten Beleuchtungselement folgende Beleuchtungselemente ausgeschaltet werden und die zweite und die vierte Ansteuerung jeweils um zwei Beleuchtungselemente, die zweite Ansteuerung um ein Beleuchtungselement und die erste Ansteuerung um drei Beleuchtungselemente versetzt ist.

Es hat sich herausgestellt, dass die in dem vorangegangenen Absatz beschriebene Vorgehensweise erheblich weniger Licht zur Kontrastierung der Fehler benötigt. Dies rührt daher, dass aufgrund des großen Dunkelfeldbereichs mit drei Beleuchtungselementen vergleichsweise wenig nicht von einem Fehler herrührendes Streulicht, welches direkt von den angeschalteten Beleuchtungselementen kommt und das den Kontrast verschlechtert, in den mittleren Teil des Dunkelfeldbereichs gelangt. Der Kontrast wird insbesondere im Bereich des mittleren abgeschalteten Beleuchtungselements, das jeweils zur Erstellung des Dunkelfeldbildes herangezogen wird, verbessert, da in dem Bereich mit der Aufnahme lediglich von Fehlern gestreutes Licht erfasst wird.

Dies bedeutet, dass kürzere Belichtungszeiten verwendet werden können, so dass in der Summe für einen Beleuchtungszyklus und damit auch für die Abtastung eines Werkstücks weniger Zeit in Anspruch genommen wird bzw. die Bandgeschwindigkeit erhöht werden kann. Dies ist ein bedeutender Fortschritt, da die Abtastrate in vielen Fällen den limitierenden Faktor bildet.

Weiter ist bei diesem Vorgehen von Vorteil, dass aufgrund des großen Dunkelfeldbereichs die angeschalteten Beleuchtungselemente mit voller Leistung betrieben werden können. Auch hierdurch wird die in der Aufnahmeeinrichtung ankommende Lichtintensität erhöht, so dass die Belichtungszeit verkürzt werden kann.

Eine weitere, bevorzugte Ausführungsform betrifft eine Recheneinheit, welche dazu eingerichtet ist, die Beleuchtungszeile in einem Beleuchtungszyklus sechsmal anzusteuern, wobei bei einer ersten, zweiten, vierten und fünften Ansteuerung jeweils ein Beleuchtungselement angeschaltet und drei dem angeschalteten Beleuchtungselement folgende Beleuchtungselemente ausgeschaltet werden und die erste, zweite, vierte und fünfte Ansteuerung jeweils um zwei Beleuchtungselemente versetzt ist. Dies führt dazu, dass das Dunkelfeld in zwei gegeneinander versetzten Zyklen über die gesamte Breite des zu überprüfenden Gegenstands wandert. Ein bspw. in dem ersten Zyklus am Rand eines Dunkelfeldes liegender Bereich liegt in dem zweiten Zyklus in der Mitte des Dunkelfeldes und umgekehrt. Dadurch werden auch unterschiedliche Beleuchtungssituationen in dem Dunkelfeld realisiert und mögliche Fehler besonders zuverlässig detektiert. Bei einer dritten und sechsten Ansteuerung werden alle Beleuchtungselemente angeschaltet, wobei auch diese Hellfeldbeleuchtung vorzugsweise mit verminderter Helligkeit erfolgt. Durch das doppelte Hellfeld wird die Fehlererkennungsrate weiter verbessert.

Auch wenn hier die Reihenfolge der ersten bis sechsten Ansteuerung grundsätzlich variiert werden kann, bildet die beschriebene Reihenfolge der ersten bis sechsten Ansteuerung eine besonders bevorzugte Ausführungsform, bei der die einzelnen Beleuchtungselemente in etwa gleichmäßig beansprucht werden. So werden durch den gewählten Zyklus die Pausenzeiten und Aktivierungszeiten der einzelnen Beleuchtungselemente sehr gleichmäßig verteilt. Dies führt zu sehr ausgewogenen Detektions- bzw. Inspektionsbedingungen. Außerdem wird jedes Beleuchtungselement bei dem gewählten Zyklus im Mittel gleich lang angeschaltet sein. Dies gilt natürlich unabhängig von der Reihenfolge der ersten bis sechsten Ansteuerung und ist auch bei einer Vielzahl der vorbeschriebenen Beleuchtungszyklen gegeben.

Durch eine Änderung der Anzahl der jeweils nebeneinander angeordneten angeschalteten und ausgeschalteten Beleuchtungselemente kann die Lichtintensität im Dunkelfeld beeinflusst werden. Gleiches lässt sich durch ein Anschalten der Beleuchtungselemente mit unterschiedlicher Energie oder Anschaltdauer erreichen.

In Weiterbildung der erfindungsgemäß vorgesehenen Beleuchtungseinrichtung können die Beleuchtungselemente der Beleuchtungseinrichtung auch in mehreren, quer zur Transportrichtung ausgerichteten Beleuchtungszeilen angeordnet sein, wobei die Recheneinheit dazu eingerichtet ist, die Beleuchtungselemente in den Beleuchtungszeilen gemäß einem vorgegebenen und erfindungsgemäß auch vorgebbaren, d.h. einstellbaren Beleuchtungszyklus anzusteuern. Vorzugsweise entspricht auch hier der Beleuchtungszyklus gerade wieder der Anzahl der Aufnahmen in dem vorgegebenen Auflösungsbereich, d.h. der Beleuchtungszyklus wird erfindungsgemäß derart gewählt, dass der Beleuchtungszyklus dann einmal angesteuert bzw. abgearbeitet ist, wenn der Gegenstand in Transportrichtung um die gewünschte Auflösung weiter transportiert ist. Durch diese mehrzeilige Beleuchtungseinrichtung besteht eine größere Flexibilität bei den Beleuchtungsmustern. Insbesondere ist es möglich, auch in Transportrichtung eine Dunkelfeldbeleuchtung zu erreichen.

Gemäß einer erfindungsgemäß bevorzugt vorgeschlagenen Konfiguration können drei Beleuchtungszeilen vorgesehen sein, wobei die Recheneinheit dazu eingerichtet ist, eine vorgebbare Anzahl von Beleuchtungselementen (einschließlich null bis alle Beleuchtungselemente) in der ersten Beleuchtungszeile von einem Ende der Beleuchtungszeile her anzuschalten (und die verbleibenden Beleuchtungselemente in dieser Beleuchtungszeile auszuschalten), kein Beleuchtungselement in der zweiten Beleuchtungszeile anzuschalten und eine vorgebbare Anzahl von Beleuchtungselementen (einschließlich null bis alle Beleuchtungselemente) in der dritten Beleuchtungszeile von dem einen oder dem anderen Ende der Beleuchtungszeile her anzuschalten (und die verbleibenden Beleuchtungselemente in dieser Beleuchtungszeile auszuschalten). Hierdurch wird auf einfache Weise ein Dunkelfeld in Transportrichtung erzeugt, d.h. die abzubildende Beleuchtungszeile wird vorzugsweise in der Mitte gewählt und symmetrisch von der ersten und dritten Beleuchtungszeile eingerahmt. Bei drei Zeilen ist die abzubildende Beleuchtungszeile in Dunkelfeld also die zweite Zeile. Entsprechendes gilt für mehr als drei Beleuchtungszeilen, wobei bevorzugt eine ungerade Anzahl von Beleuchtungszeilen vorgesehen werden soll.

Es ist auch möglich, die mehrzeiligen Beleuchtungseinrichtungen in Kombination mit den vorher beschriebenen Ansteuermustern zu betreiben, so dass bei der einen oder anderen Ansteuerung auch in der dritten Beleuchtungszeile Beleuchtungselemente angesteuert (d.h. angeschaltet) werden können. Das Vorsehen weiterer Muster kann der Fachmann also noch dem jeweiligen Inspektionsbedarf auswählen.

Daher ist die Erfindung nicht auf die konkret beschriebenen Muster und Beleuchtungszyklen beschränkt, die lediglich besonders vorteilhafte Ausführungen beschreiben, um mit möglichst geringem Ansteueraufwand eine umfassende Überprüfung des Gegenstands durchführen zu können.

Vorzugsweise ist die erfindungsgemäße Einrichtung dazu eingerichtet, dass die insbesondere mehrzeilige Beleuchtungseinrichtung und die Aufnahmeeinrichtung jeweils genau eine quer zur Transportrichtung des Gegenstands angeordnete, abzubildende Beleuchtungszeile bzw. Aufnahmezeile aufweisen, wobei die Aufnahmeeinrichtung derart eingestellt ist, dass die Aufnahmezeile der Aufnahmeeinrichtung die abzubildende Beleuchtungszeile oder einen Ausschnitt dieser Beleuchtungszeile bei der Aufnahme abbildet.

Dies ist bei einzeiligen Beleuchtungs- und Aufnahmeeinrichtungen selbstverständlich, wobei in der Anordnung darauf geachtet werden sollte, dass die Aufnahmeeinrichtung keinen Bereich außerhalb der Beleuchtungszeile abbildet. Bei einer mehrzeiligen Beleuchtungseinrichtung, d.h. einer Beleuchtungseinrichtung mit in mehreren Zeilen in Transportrichtung nebeneinander angeordneten Beleuchtungselementen, schlägt die vorliegende Erfindung vor, genau eine Beleuchtungszeile als abzubildende und zu überprüfende Beleuchtungszeile auszuwählen. Dies kann durch Anordnung der Aufnahmeeinrichtung erfolgen, insbesondere wenn eine Zeilenkamera mit genau einer Zeile verwendet wird. Alternativ kann diese Zuordnung auch bei der Auswertung der Bilder erfolgen, wenn die Aufnahmeeinrichtung eine Flächenkamera, beispielsweise eine CCD-Matrix ist und mehrere in Transportrichtung nebeneinander angeordnete Bildaufnahmeelemente die eine Beleuchtungszeile oder deren gewünschten Ausschnitt abdecken. Diese Bildaufnahmeelemente, welche die abzubildende Beleuchtungszeile erfassen, können dann bei der Bildauswertung zusammen gefasst werden. Dies ist insbesondere bei mehreren Beleuchtungszeilen von Interesse, wobei wie bereits erwähnt die abzubildende Beleuchtungszeile dann vorzugsweise in der Mitte angeordnet ist.

Bei Verwendung einer Zeilenkamera wird die Auflösung in Vorschubrichtung des bewegten Gegenstands insbesondere durch zwei Faktoren bestimmt, nämlich durch die Geometrie der optischen Abbildung zusammen mit der Pixelausdehnung und durch die Geschwindigkeit, mit der die einzelnen Zeilen hintereinander aufgenommen werden.

Die Geometrie der optischen Abbildung zusammen mit der Pixelausdehnung der Zeilenkamera bestimmt, welche Länge der Bahn auf eine Zeile der Kamera abgebildet wird. Da die meisten Zeilenkameras quadratische Pixel besitzen und die Optiken radialsymmetrisch zur optischen Achse abbilden, ist die Auflösung in Richtung Vorschubrichtung meist gleich der Auflösung quer zur Bahn. Es ist auch möglich, durch die Wahl einer entsprechenden unsymmetrischen Optik oder durch nicht quadratische Pixel andere Verhältnisse herzustellen, dies ist allerdings wegen der notwendigen Spezialkomponenten teuer und deshalb wenig gebräuchlich. Eine solche Anpassung ist auch nur in engen Grenzen möglich.

Der zweite Faktor, der die Auflösung in Vorschubrichtung des bewegten Gegenstands bestimmt, betrifft die Geschwindigkeit, mit der die einzelnen Zeilen hintereinander aufgenommen werden. Prinzipiell gilt: je höher die Geschwindigkeit gewählt werden kann, desto feiner ist die Auflösung. Um beispielsweise bei quadratischen Pixeln in Vorschubrichtung die gleiche Auflösung zu erhalten wie in Querrichtung, muss in einem Zyklus so schnell abgetastet werden, dass der Vorschub von Zeile zu Zeile insgesamt der Querauflösung entspricht.

Die Erfindung nutzt die Tatsache, dass moderne Zeilenkameras einzelne Zeilen sehr schnell hintereinander aufnehmen können. Es können demnach auch viel mehr Zeilen aufgenommen werden als es für die notwendige Auflösung in Transportrichtung eigentlich notwendig wäre. Diese Eigenschaft wird von der Erfindung so ausgenutzt, dass die Aufnahmeeinrichtung für eine zu inspizierende Zeile quer zur Richtung der Bewegung des Gegenstands, d.h. einen zeilenförmigen Auflösungsbereich, nicht nur eine sondern einen ganzen Zyklus von mehreren Bildzeilen aufnimmt, wobei bei jeder Zeile innerhalb eines Zyklus eine andere Beleuchtungsart zeilensynchron bzw. aufnahmesynchron, eingeschaltet wird. Dies lässt sich beispielsweise durch geblitzte LED-Beleuchtungen realisieren. Aus dem durch die entsprechend erzeugten Aufnahmen der Aufnahmeeinrichtung gebildete Rohbild lässt sich für jede in einem Zyklus verwendete Beleuchtungsart je ein Bild zusammensetzen, das nur noch Zeilen der jeweiligen Beleuchtungsart enthält. Die Bilder der verschiedenen Beleuchtungsarten können dann genauso weiterverarbeitet werden als ob sie aus verschiedenen Kamerakanälen stammten. Diese Bilder erfassen zwar leicht gegeneinander versetzte Bereiche des Gegenstands, solange die in einem Zyklus abgetastete Länge des Gegenstandsbereichs jedoch kleiner als die geforderte Auflösung in Transportrichtung ist, spielt dieser Versatz für die Anwendung der erfindungsgemäßen Vorrichtung bzw. des erfindungsgemäßen Verfahrens keine Rolle.

Die erfindungsgemäße Einrichtung kann sowohl für transparente Materialien, insbesondere ein Strukturglasband, als auch für nicht-transparente Materialieneingesetzt werden und ist sowohl in einer Auflicht-Beleuchtungsanordnung als auch in einer Durchlicht-Beleuchtungsanordnung realisierbar.

Um das Licht bestimmten Überprüfungszwecken anzupassen, kann zwischen der Beleuchtungseinrichtung und dem Gegenstand und/oder zwischen dem Gegenstand und der Aufnahmeeinrichtung eine optische Lichtformungseinheit und/oder ein Muster, insbesondere ein Moiré-Gitter, angeordnet sein.

Die Lichtformungseinheit ist insbesondere aus Linsen, Diffusoren und/oder Mikrolinsen aufgebaut. Derartige Lichtformungseinheiten eigenen sich besonders gut für die Inspektion eines Gegenstands aus Strukturglas, insbesondere einem Strukturglasband, in der Durchlichtanordnung. Bei der Hellfeldbeleuchtung für Strukturglas muss das Licht möglichst homogen von vorne, hinten, rechts und links, d.h. aus allen Richtungen, auf das Strukturglas einstrahlen, damit das vorhandene Strukturmuster möglichst schwach zu erkennen ist und die gesuchten Defekte in der Durchlichtanordnung kontrastreich zu erkennen sind. Andererseits ist bei der Dunkelfeldbeleuchtung eine eher gerichtete Beleuchtung senkrecht zur Transportrichtung notwendig, damit die Grenzen zwischen den hellen und dunklen LED Gruppen möglichst scharf sind.

Eine für diesen Zweck besonders vorteilhafte Lichtformungseinheit ist eine zwischen dem Beleuchtungselement und dem Gegenstand angeordnete zylindrische Fresnel-Linse, vorzugsweise in Einheit mit einem Diffusor, der zwischen der Fresnel-Linse und dem Beleuchtungselement bzw. der Beleuchtungseinrichtung angeordnet ist.

Die zylindrische Fresnel-Linse verteilt das Licht besonders in Transportrichtung und fokussiert das Beleuchtungselement dann auf den zu überprüfenden Gegenstand. Das Beleuchtungselement, bspw. eine LED oder eine Gruppe von gleichzeitig geschalteten LEDs, wird durch die zylindrische Fresnel-Linse also verkleinert auf das Material, insbesondere das Strukturglas, abgebildet. Trotz der Streuung des Lichts durch das Strukturglas schaut die optische Aufnahmerichtung möglichst immer in die schmale Beleuchtungszeile und nicht daran vorbei.

Der Diffusor ist sinnvoll, um die Intensität entlang der Beleuchtungszeile, d.h. quer zur Transportrichtung, etwas zu homogenisieren, weil zwischen den Beleuchtungselementen in der einen Beleuchtungszeile, bspw. nebeneinander angeordneten LEDs, relativ viel Platz bzw. nicht-leuchtender Raum besteht. Das Strukturglas selbst hat eine weitere Diffusor-Wirkung. Die erfindungsgemäße Anordnung der Lichtformungseinheit ist allerdings nicht auf eine Überprüfung von Gegenständen aus Strukturglas beschränkt. Der Diffusor sollte vorzugsweise schwach streuende optische Eigenschaften aufweisen, da ansonsten die Grenzen zwischen den einzelnen Beleuchtungselementen verschwimmen und die Qualität der Dunkelfelddetektion einschränken.

Als Muster kann beispielsweise ein Moiré-Gitter eingesetzt werden, das zur Darstellung verzerrender Fehler dienen kann. Alternativ können andere Muster, beispielsweise ein Schachbrett-Muster eingesetzt werden. Das Moiré-Gitter erzeugt zusammen mit den Pixeln der Aufnahmeeinrichtung einen Moiré-Effekt in der Aufnahme der Aufnahmeeinrichtung bzw. in dem aus den Aufnahmen zusammengesetzten Bild.

Insbesondere weist in einer Ausführungsform der Erfindung die Beleuchtungseinrichtung mehrere unabhängig voneinander schaltbare Beleuchtungselemente auf, welche auf verschiedenen Seiten des bewegten Gegenstands und/oder unter verschiedenen Winkeln zu dem bewegten Gegenstand angeordnet sind. Bei der Verwendung von Beleuchtungselementen, die unter verschiedenem Winkel zu dem bewegten Gegenstand angeordnet sind, können beispielsweise Texturen auf einer Oberfläche unterdrückt werden, um diese von topologischen Fehlern zu unterscheiden.

In einer weiteren Ausführungsform kann die Beleuchtungseinrichtung alternativ oder zusätzlich mehrere unabhängig voneinander schaltbare Beleuchtungselemente aufweisen, welche Licht aus verschiedenen Wellenlängenbereichen aussenden. Durch die Verwendung von Licht unterschiedlicher Wellenlänge kann das von der Aufnahmeeinrichtung erfasste, von dem Gegenstand reflektierte oder transmittierte Licht genau dahingehend unterschieden werden, von welchem Beleuchtungselement dieses stammt. Hierfür ist erforderlich, dass die Aufnahmeeinrichtung das ankommende Licht aus den verschiedenen Wellenlängenbereichen unterscheiden kann.

Erfindungsgemäß bezieht sich die Erfindung auch auf ein Verfahren zur optischen Prüfung eines in einer Transportrichtung bewegten Gegenstands auf Fehler entsprechend den Merkmalen des Anspruchs 13, insbesondere unter Anwendung der vorbeschriebenen Einrichtung. Bei dem Verfahren wird der Gegenstand mit einer Beleuchtungseinrichtung vorzugsweise zur Erzeugung eines Hellfelds oder eines Dunkelfelds beleuchtet. Ferner werden die insbesondere als Hellfeld oder als Dunkelfeld beleuchteten Bereiche mit einer optischen Aufnahmeeinrichtung, insbesondere einer Zeilenkamera oder einen Flächenkamera mit fotosensitiven Elementen, aufgenommen und die aufgenommenen Bilder auf das Vorhandensein von Fehlern ausgewertet. Die Aufnahmefrequenz hängt von der gewünschten Auflösung in Transportrichtung und der Geschwindigkeit des bewegten Gegenstands ab.

Um verschiedene Beleuchtungssituationen innerhalb der gewünschten Auflösung zu erreichen, wir die Aufnahmefrequenz erfindungsgemäß derart gewählt, dass die Aufnahmeeinrichtung in einem der gewünschten Auflösung in Transportrichtung entsprechenden Auflösungsbereich des Gegenstands mehrere Aufnahmen, d.h. mindestens zwei Aufnahmen, macht. Hierdurch können bei geeigneter geometrischer Anordnung und/oder Ansteuerung der Beleuchtungseinrichtung verschiedene Beleuchtungssituationen (Hellfeld, Dunkelfeld, unter verschiedenen Winkeln zum Gegenstand, von verschiedenen Seiten des Gegenstands, mit Licht unterschiedlicher Wellenlänge) mit lediglich einer Kamerabank realisiert werden.

Gemäß einer bevorzugten Ausführungsform des vorgeschlagenen Verfahrens macht die Aufnahmeeinrichtung in dem Auflösungsbereich zwei, drei, vier, fünf oder sechs Aufnahmen. Grundsätzlich können bei Anwendung des Verfahrens natürlich auch noch mehr Aufnahmen gemacht werden.

Ferner weist die Beleuchtungseinrichtung vorzugsweise mehrere einzeln schaltbare Beleuchtungselemente, beispielsweise LED's oder Gruppen von gemeinsam schaltbaren LED's, in einer oder mehreren quer zur Transportrichtung des Gegenstands angeordneten Beleuchtungszeilen auf, welche für die mehreren Aufnahmen in dem einen Auflösungsbereich unterschiedlich angesteuert werden. In diesem Fall können bevorzugt mit einer Zeilenkamera, d.h. einer Kamera mit in genau einer quer zur Transportrichtung ausgerichteten Zeile angeordneten Bildaufnahmeelementen, verschiedene Aufnahmen des Gegenstandes in dem einen Auflösungsbereich unter völlig verschiedenen Lichtverhältnissen gemacht werden.

Durch Anwendung dieser vorgeschlagenen Verfahrensvariante wird der Auflösungsbereich also insgesamt durch zwei, drei, vier, fünf oder sechs oder mehr Bilder abgebildet, wobei jedes Bild einen zumindest teilweise unterschiedlichen Bereich des Gegenstands auf. Diese können erfindungsgemäß also vollständig voneinander getrennt oder miteinander überlappend ausgebildet sein. Jedes Bild entspricht vorzugsweise einer Bildzeile der Zeilenkamera.

Durch dieses Verfahren können gezielt verschiedene Beleuchtungskanäle, insbesondere als Hellfeld und Dunkelfeld, an dem einen Platz der einen Kamera bzw. Aufnahmeeinrichtung realisiert werden. Dafür ist die Recheneinheit dazu eingerichtet, die einzeln schaltbaren Beleuchtungselemente als Hellfeldbeleuchtung oder Dunkelfeldbeleuchtung zu schalten. Für eine Hellfeldbeleuchtung werden ein oder ggf. mehrere, vorzugsweise benachbarte Beleuchtungselemente angeschaltet. Das Anschalten kann zur Vermeidung einer Überstrahlung mit verminderter Helligkeit erfolgen, wie nachfolgend im Zusammenhang mit konkreten Beispielen beschrieben. Diese Technik lässt sich jedoch allgemein bei jeder Ausführungsform der Erfindung mit einer Hellfeldbeleuchtung anwenden. Bei der Dunkelfeldbeleuchtung werden gezielt angeschaltete und ausgeschaltete Beleuchtungselemente in einer geeigneten Anordnung kombiniert, wobei die Fehlerauswertung im Bereich der ausgeschalteten Beleuchtungselemente erfolgt. Dort wird von Fehlern abgelenktes Licht detektiert, das von den angeschalteten Beleuchtungselementen ausgesendet wurde.

Eine besonders flexible Ansteuerung lässt sich erreichen, wenn die Beleuchtungselemente in der einen Beleuchtungszeile oder in mehreren Beleuchtungszeilen gemäß einem vorgegebenen und erfindungsgemäß auch vorgebbaren, d.h. einstellbaren Beleuchtungszyklus zur Erzeugung verschiedener Beleuchtungsmuster angesteuert werden. Vorteilhafte Muster und Beleuchtungszyklen wurden bereits beschrieben und können auch durch das Verfahren realisiert werden, ohne dass die Ausführung des Verfahrens auf genau diese konkreten Beispiele beschränkt wäre.

Wie oben erläutert, werden aus den in dem Auflösungsbereich des Gegenstands erstellten mehreren Aufnahmen mindestens zwei Bilder des Gegenstands zusammengesetzt und einzeln oder kombiniert auf das Vorhandensein von Fehlern ausgewertet. Hierbei ergibt sich jedes Bild aus den entsprechenden Aufnahmen aller sich über den Gegenstand erstreckenden Auflösungsbereiche.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: schematisch den Aufbau einer erfindungsgemäßen Einrichtung;
- Fig. 2: schematisch die Situation bei einer herkömmlichen Abtastung des Auflösungsbereichs gemäß dem Stand der Technik;
- Fig. 3: schematisch eine erste Ausführungsform der vorliegenden Erfindung mit einer einzeiligen Beleuchtungseinrichtung mit einem ersten Beleuchtungszyklus;
- Fig. 4: schematisch die Darstellung eines zweiten Beleuchtungszyklus;
- Fig. 5: schematisch die Darstellung eines dritten Beleuchtungszyklus;
- Fig. 6: schematisch die Darstellung eines vierten Beleuchtungszyklus;
- Fig. 7: schematisch die Darstellung eines fünften Beleuchtungszyklus;
- Fig. 8: schematisch die Darstellung eines sechsten Beleuchtungszyklus;
- Fig. 9: schematisch eine zweite Ausführungsform der vorliegenden Erfindung mit einer dreizeiligen Beleuchtungseinrichtung;
- Fig. 10: ein konkretes Beleuchtungsmuster für die in Fig. 8 dargestellte Ausführungsform;
- Fig. 11: schematisch eine dritte Ausführungsform der vorliegenden Erfindung mit einer Lichtformungseinheit in einer Ansicht in Transportrichtung und
- Fig. 12: schematisch die dritte Ausführungsform in einer Ansicht quer zur Transportrichtung.

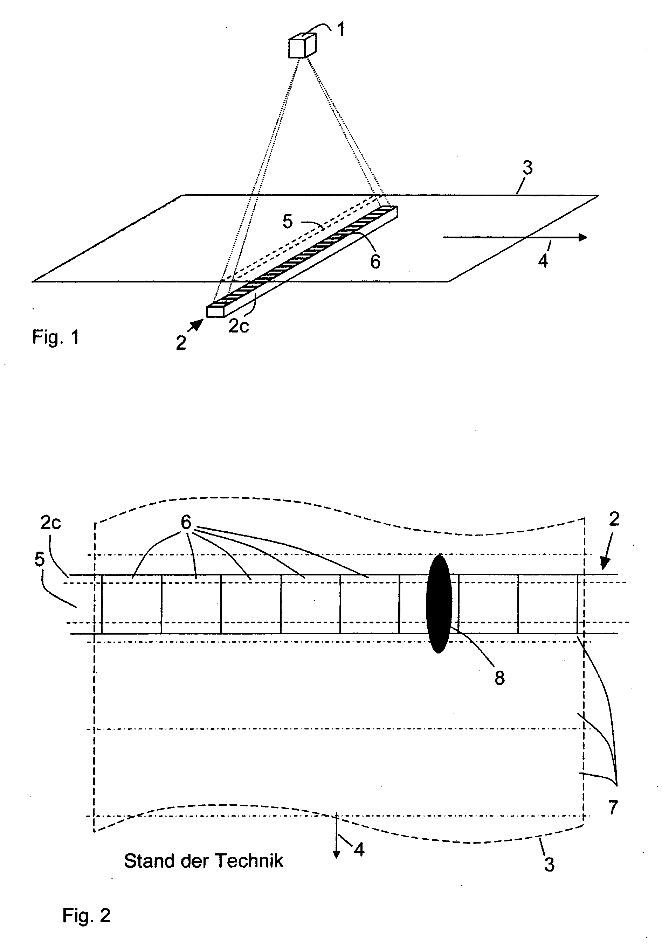

In Fig. 1 ist eine erfindungsgemäße Anordnung gemäß einer ersten Ausführungsform dargestellt, bei der ein in einer Transportrichtung 4 bewegter Gegenstand 3 in Form eines transparenten Materials auf Fehler 8 überprüft werden soll, wie er in Fig. 2 angedeutet ist.

Dazu weist die erfindungsgemäße Vorrichtung eine Beleuchtungseinrichtung 2 auf, die gemäß Fig. 1 aus einer Beleuchtungszeile 2c mit nebeneinander angeordneten, schaltbaren Beleuchtungselementen 6 auf deren Oberseite gebildet ist. Die Beleuchtungselemente 6 können insbesondere einzelne LED's (Light Emitting Diodes) sein. Die Beleuchtungszeile 2c der Beleuchtungseinrichtung 2 ist quer zur Transportrichtung 4 des Gegenstands 3 angeordnet. Ferner weist die erfindungsgemäße Einrichtung eine optische Aufnahmeeinrichtung 1 zur Aufnahme von Bildern der beleuchteten Bereiche 5 des Gegenstands 3 auf. Bei einem beleuchteten Bereich 5 muss es sich nicht unbedingt um den angestrahlten Bereich auf dem Gegenstand 3 handeln (Hellfeld), sondern kann auch einen Bereich benachbart zu einem angestrahlten Bereich sein (Dunkelfeld). Der aufgenommene und in dem vorbeschriebenen Sinne als Hellfeld oder Dunkelfeld beleuchtete Bereich wird auch als Inspektionslinie 5 bezeichnet. Der durch die Beleuchtungseinrichtung 2 beleuchtete und aufgenommene Bereich 5 deckt vorzugsweise die gesamte Breite des Gegenstands 3 ab, so dass der beleuchtete Bereich 5 mit der Inspektionslinie zusammen fällt.

Entsprechend der Ausdehnung der Pixel in der Zeilenkamera deckt die Inspektionslinie 5 in Transportrichtung 4 einen schmalen Streifen auf dem Material 3 ab. Die Beleuchtungseinrichtung 2 muss in Transportrichtung 4 eine Ausdehnung haben, die mindestens so groß ist, dass diese Breite in dem beleuchteten Bereich 5 überdeckt wird.

In dem dargestellten Beispiel handelt es sich bei dem Gegenstand 3 um transparentes Material, beispielsweise ein Endlos-Glasband. Daher ist die erfindungsgemäße Einrichtung in dem dargestellten Beispiel als Durchlichtanordnung aufgebaut, bei der die optische Aufnahmeeinrichtung 1 und die Beleuchtungseinrichtung 2 auf verschiedenen Seiten des transparenten Materials 3 angeordnet sind, wobei die optische Aufnahmeeinrichtung 1 derart ausgerichtet ist, dass sie den beleuchteten Bereich 5 respektive die Inspektionslinie 5 auf dem Gegenstand 3 als Bild erfasst.

Die optische Aufnahmeeinrichtung bzw. Kamera 1 schaut also durch das transparente Material 3 in die Beleuchtungszeile 2 und deren auf der Oberseite angebrachten an- und ausschaltbaren Beleuchtungselemente 6. Die Fokussierung der Kamera erfolgt auf das transparente Material 3. Da sich das transparente Material 3 in Transportrichtung 4 fortbewegt, wird somit der gesamte Gegenstand 3 auf Fehler überprüft, indem Bilder der Inspektionslinie 5 aufgenommen werden derart, dass die nacheinander aufgenommenen Inspektionslinien 5 mit der gewünschten Auflösung den gesamten Gegenstand 3 erfassen.

Dies ist in Fig. 2 verdeutlicht, in der die Situation bei einer konventionellen Abtastung gemäß dem Stand der Technik stark vergrößert von oben dargestellt ist. Das Material 3 wird in Transportrichtung 4, d.h. in der bildlichen Darstellung nach unten, bewegt. Der Gegenstand 3 wird dabei streifenweise abgetastet, wobei die Breite eines Streifens 7 in Transportrichtung die geforderte bzw. gewünschte Auflösung in Transportrichtung 4 darstellt. Die Auflösung gibt die minimale Größe eines Fehlers 8 an, der bei der Inspektion sicher erfasst werden soll. Ein derartiger Fehler 8 ist in Fig. 2 schematisch eingezeichnet.

Bei einer herkömmlichen konventionellen Abtastung steuert eine in den Figuren nicht dargestellte Recheneinheit die Aufnahmeeinrichtung in Abhängigkeit von der Geschwindigkeit des Gegenstands 3 in Transportrichtung derart, dass in jedem Streifen 7, der auch als Auflösungsbereich bezeichnet wird, ein Bild aufgenommen wird, das anschließend mittels Bildauswertung in der Recheneinheit auf Fehler untersucht wird. Dies ist in Fig. 2 als Momentaufnahme für den obersten der drei vollständig dargestellten Streifen 7 gezeigt. Dort ist die Beleuchtungseinrichtung 2 als eine Beleuchtungszeile mit schaltbaren Elementen 6 dargestellt, die das transparente Material durchleuchten. Durch die optische Aufnahmeeinrichtung 1 wird ein Teil des beleuchteten Bereichs 5, nämlich die Inspektionslinie 5, abgebildet. In einem derartigen Bild findet sich bei einem fehlerfreien transparenten Material ein unstrukturierter heller Bereich. Der Fehler 8 erscheint darin als dunkler Kontrast und wird dadurch erkannt.

Sobald sich der Gegenstand 3 in Transportrichtung 4 um genau eine Streifenbreite weiter bewegt hat, steuert die Recheneinheit die optische Aufnahmeeinrichtung für eine neue Aufnahme an. Es wird also jeweils ein Ausschnitt des Streifens 7 aufgenommen, der bei der Aufnahme einer Zeile in dem Sichtbereich der Kamera (Inspektionslinie 5) liegt. Bei der konventionellen Abtastung wird in jedem Streifen 7 nur eine Aufnahme einer Inspektionslinie 5 gemacht. Daher ist nur eine einzige Beleuchtungsart möglich. Ob ein Fehler 8, der nur so groß wie die geforderte Auflösung ist, gesehen wird oder nicht, hängt also davon ab, ob er mit der gewählten Beleuchtungsart feststellbar ist oder nicht.

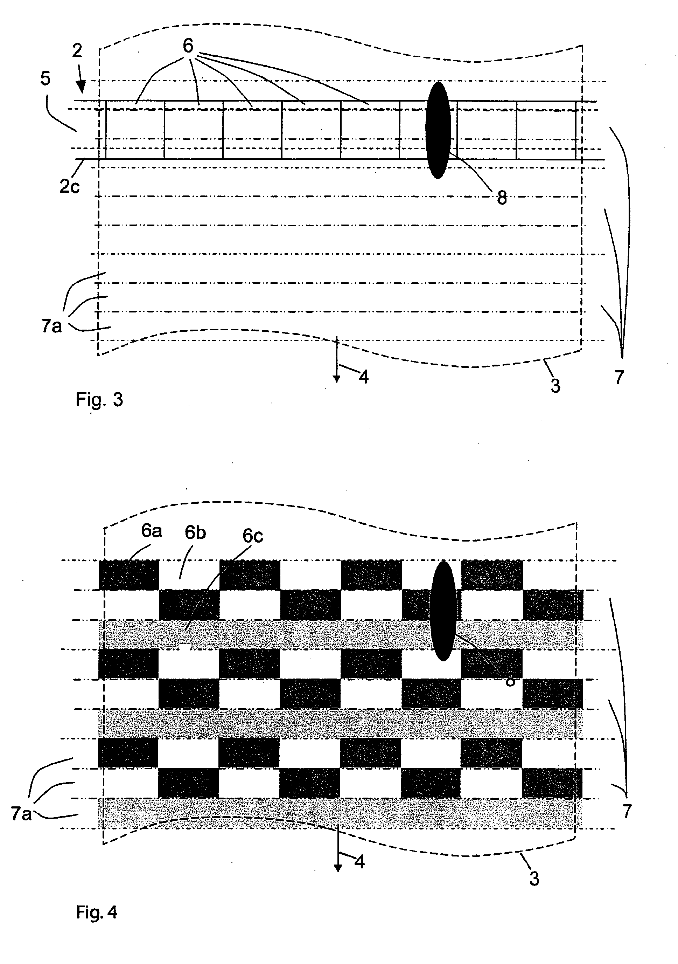

In Fig. 3 wird nun das Konzept der vorliegenden Erfindung schematisch erläutert, wonach der Gegenstand 3 mit einer höheren Abtastfrequenz abgetastet wird, als es für die Auflösung in Transportrichtung gefordert ist. Dies führt dazu, dass der Streifen bzw. Auflösungsbereich 7 in mehrere Teilstreifen 7a aufgeteilt, zu denen jeweils ein durch die Kamera 1 aufgenommenes Bild vorliegt.

Diese Bilder sind, da die Einrichtung nicht bewegt wird und der Gegenstand 3 in Transportrichtung bewegt wird, natürlich an derselben Raumposition, aber zu verschiedenen Zeiten aufgenommen. Dies ist in Fig. 3 und den nachfolgenden Figuren durch nebeneinanderliegende Teilstreifen 7a dargestellt, die einen angrenzenden Bereich auf dem Gegenstand 3, aber auch überlappende Bereiche auf dem Gegenstand 3 darstellen können.

Erfindungsgemäß ist die nicht dargestellte Recheneinheiten also dazu eingerichtet, die Aufnahmefrequenz für die Aufnahmeeinrichtung 1 derart zu wählen, dass die Aufnahmeeinrichtung 1 in einem der gewünschten Auflösung in Transportrichtung 4 entsprechenden Auflösungsbereich 7 des Gegenstands 3 mehrere Aufnahmen macht und den Auflösungsbereich 7 in Teilstreifen 7a aufteilt. In dem in Fig. 3 gezeigten Beispiel wird die dreifache Aufnahmefrequenz bzw. Aufnahmegeschwindigkeit benutzt. Die Obergrenze für die verwendbare Geschwindigkeit (Aufnahmefrequenz) hängt von den technischen Daten der verwendeten optischen Aufnahmeeinrichtung 1 ab, insbesondere der Geschwindigkeit, mit der die Zeile der als Zeilenkamera 1 ausgebildeten Aufnahmeeinrichtung ausgelesen werden kann, oder der notwendigen Belichtungszeit.

Die Verwendung der dreifachen Aufnahmefrequenz hat zur Folge, dass der Streifen bzw. der Auflösungsbereich 7 in drei Teilstreifen 7a aufgeteilt wird. Wenn die Beleuchtungselemente 6 der Beleuchtungseinrichtung 2 synchron mit der Aufnahme eines Teilstreifens 7a umgeschaltet werden, werden die Bilder der einzelnen Teilstreifen 7a in drei verschiedenen Beleuchtungsarten aufgenommen, so dass innerhalb der gewünschten Auflösung (Auflösungsbereich 7) drei verschiedene Auswertungen auf Fehler möglich sind. Die einzelne Aufnahme bei der Einrichtung gemäß Fig. 3 erfolgt dabei entsprechend dem in Fig. 2 beschriebenen Prinzip, indem die optische Aufnahmeeinrichtung 1 mit ihrer Inspektionslinie 5 den beleuchteten Bereich der einzelnen Beleuchtungselemente 6 der Beleuchtungseinrichtung 2 erfasst.

Eine derart erzeugte Aufnahme ist in Fig. 4 dargestellt, wobei jeder der Teilstreifen 7a zu einem anderen Zeitpunkt aufgenommen wurde und in der Darstellung gemäß Fig. 4 sämtliche Aufnahmen in einem Bild zusammengesetzt wurden. In Fig. 4 sind die jeweiligen Teilstreifen 7a mit dem Zustand der zugehörigen Beleuchtungselemente 6 zu diesen Zeitpunkt mit dargestellt. Darin bezeichnen 6a dunkle, abgeschaltete und 6b helle, angeschaltete Beleuchtungselemente 6. 6c stellt ein Beleuchtungselement mit verminderter Helligkeit dar. Diese kann auf verschiedene Weise erzeugt werden: entweder wird die Energie und/oder Leuchtdauer am Beleuchtungselement 6 vermindert oder die Belichtungsdauer der Kamera 1. Ein Fehler 8 in der Größe der minimalen Auflösung liegt nun in drei verschiedenen Teilstreifen 7a vor und kann somit auf drei verschiedene Arten beleuchtet werden.

Bei einer ersten Ansteuerung (in Fig. 4 der oberste Teilstreifen 7a in einem Auflösungsbereich 7) werden jeweils die in der Nummerierung geraden Beleuchtungselemente 6 angesteuert. Bei der zweiten Ansteuerung in dem darunter liegenden Teilstreifen 7a werden jeweils die ungeraden Beleuchtungselemente 6 angesteuert. Dies führt zu einem schachbrettartigen Muster der beiden oberen Teilstreifen 7a mit jeweils abwechselnden hellen Beleuchtungselementen 6b und dunklen Beleuchtungselementen 6a, die in den beiden Teilstreifen 7a zueinander versetzt angeordnet sind. Bei der dritten Ansteuerung des in Fig. 4 untersten Teilstreifens 7a des einen Auflösungsbereichs 7 werden alle Beleuchtungselemente 6 mit verminderter Helligkeit 6c angeschaltet. Als Hellfeldbild werden alle Aufnahmen, die durch die Kamera 1 in der dritten Ansteuerung erzeugt wurden, zusammengesetzt. Das Dunkelfeldbild wird dadurch ermittelt, dass die im Bereich der abgeschalteten Beleuchtungselement 6a gemachten Aufnahmen der Kamera in der ersten und der zweiten Ansteuerung zusammengesetzt werden.

Der Fehler 8 wird damit sowohl in dem Hellfeld mit verminderter Helligkeit 6c als auch in dem Dunkelfeld 6a erfasst, so dass die Wahrscheinlichkeit für das Erkennen des Fehlers in der Bildauswertung insgesamt sehr hoch ist.

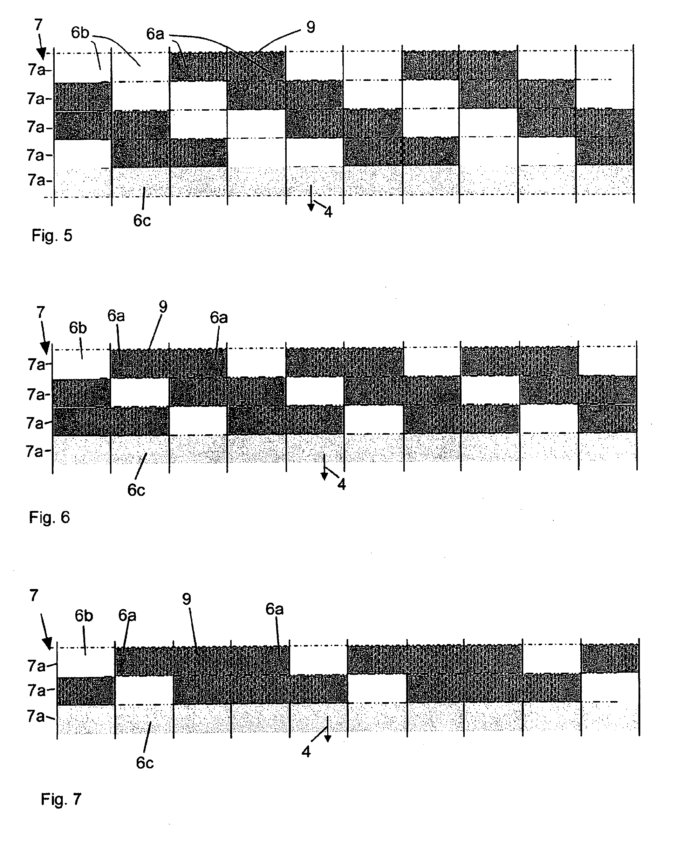

In den nachfolgend beschriebenen Fig. 5 bis 7 sind jeweils weitere Beleuchtungszyklen dargestellt, wobei Fig. 5 einen fünfzeiligen Beleuchtungszyklus, Fig. 6 einen vierzeiligen Beleuchtungszyklus und Fig. 7 einen dreizeiligen Beleuchtungszyklus wiedergibt. Grundsätzlich erlauben Beleuchtungszyklen mit weniger Zeilen eine höhere Abtast- und somit Produktionsgeschwindigkeit. Beleuchtungszyklen mit mehr Zeilen erzeugen einen besseren Kontrast. Die Entscheidung über die Art des Beleuchtungszyklus kann je nach Aufgabenstellung in dem konkreten Fall erfolgen, da die Beleuchtungszyklen bei der erfindungsgemäßen Einrichtung konfigurierbar sind.

Bei dem in Fig. 5 dargestellten Zyklus wird eine Beleuchtungszeile entsprechend einem Teilstreifen 7a in einem Beleuchtungszyklus fünfmal angesteuert, wobei bei einer ersten, zweiten, dritten und vierten Ansteuerung (entsprechend dem ersten, zweiten, dritten und vierten Teilstreifen 7a) jeweils zwei aufeinanderfolgende Beleuchtungselemente 6b angeschaltet und zwei den angeschalteten Beleuchtungselementen 6b folgende Beleuchtungselemente 6a ausgeschaltet werden. Die erste, zweite, dritte und vierte Ansteuerung ist jeweils um ein Beleuchtungselement 6 versetzt, so dass die Dunkelfelder 6a auf dem Gegenstand 3 von Aufnahme zu Aufnahme quer zur Transportrichtung 4 über den Gegenstand wandern. In einer fünften Ansteuerung werden alle Beleuchtungselemente 6c mit verminderter Helligkeit zur Schaffung eines Hellfeldes angeschaltet.

In den abgeschalteten Beleuchtungselementen 6a sind die Dunkelfelder 9 als schraffierte Bereiche markiert, die in einem Teilstreifen 7a jeweils das Dunkelfeld darstellen. Die jeweiligen seitlichen Beleuchtungen auf jeder Seite des Dunkelfelds werden durch die jeweils daneben liegenden hellen Beleuchtungselemente 6b realisiert. Die zwischen dem Dunkelfeld 9 und dem hellen Beleuchtungselement 6b liegenden, nicht schraffierten Bereiche der dunklen Beleuchtungselemente 6b können dagegen nicht als Dunkelfeld 9 genutzt werden, da sie noch zu nah an der jeweiligen Beleuchtung 6b liegen und es zu Überstrahlungen kommt.

In dieser Anordnung wandert das Dunkelfeld 9 also innerhalb eines Beleuchtungszyklus quer zur Transportrichtung 4, so dass in einem gesamten Zyklus die gesamte Fläche auch bei großen Breiten abgedeckt wird. Der letzte Teilstreifen wird wieder als Hellfeld mit Beleuchtungselementen 6c verminderter Helligkeit geschaltet. Dies dient wie bereits erwähnt dazu, eine Überstrahlung zu vermeiden. Bei anderen Beleuchtungszyklen, wie sie in den Fig. 6 und 7 dargestellt sind, geschieht dies in analoger Weise.

Bei dem in Fig. 6 dargestellten Beleuchtungszyklus wird eine Beleuchtungszeile insgesamt viermal angesteuert, was zu insgesamt vier Teilstreifen 7a führt. Bei einer ersten, zweiten und dritten Ansteuerung sind jeweils ein Beleuchtungselement 6b angeschaltet und zwei dem angeschalteten Beleuchtungselement 6b folgende Beleuchtungselemente ausgeschaltet. Die erste, zweite und dritte Ansteuerung ist jeweils um ein Beleuchtungselement 6 versetzt, so dass auch hier das Dunkelfeld 9 quer zur Transportrichtung 4 über den Gegenstand 3 wandert und innerhalb eines Beleuchtungszyklus, welcher dem Auflösungsbereich 7 entspricht, den Gegenstand 3 vollständig abdeckt.

Bei dem in Fig. 7 realisierten Muster wird die Beleuchtungszeile 2c in einem Beleuchtungszyklus dreimal angesteuert, wobei bei einer ersten und zweiten Ansteuerung jeweils ein Beleuchtungselement 6b angeschaltet und drei dem angeschalteten Beleuchtungselement 6b folgende Beleuchtungselemente 6a ausgeschaltet werden. Die erste und zweite Ansteuerung sind jeweils um ein Beleuchtungselement 6 versetzt. In einer dritten Ansteuerung werden wieder alle Beleuchtungselemente 6c mit verminderter Helligkeit angeschaltet. In dieser Konfiguration wird ein breiteres Dunkelfeld 9 erreicht, welches schneller quer zur Transportrichtung 4 über die gesamte Breite des Gegenstands 3 wandert, so dass der Beleuchtungszyklus verkürzt und die Transportgeschwindigkeit 4 erhöht werden kann.

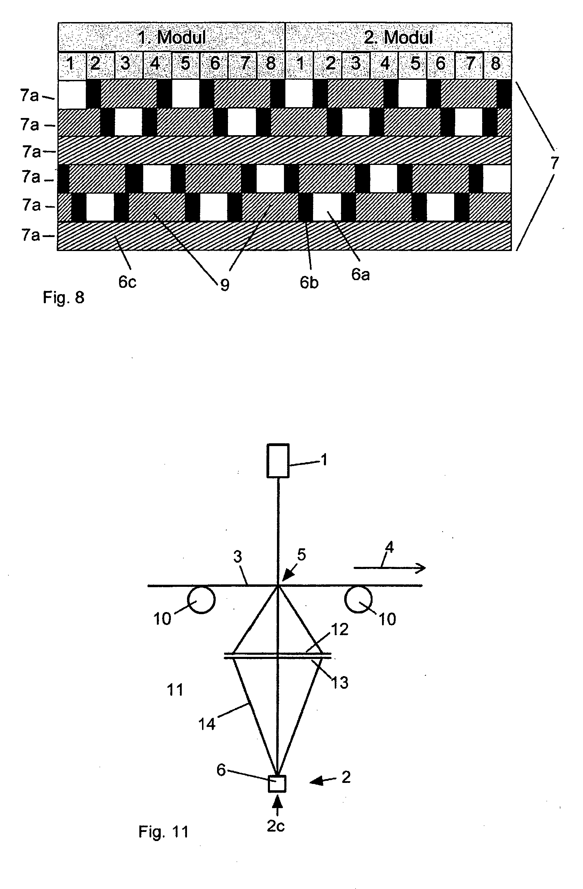

Das in Fig. 8 realisierte Muster greift das Muster gemäß Fig. 7 auf und stellt einen Beleuchtungszyklus dar, in dem die Beleuchtungszeile 2c sechsmal angesteuert wird, wobei bei einer ersten, zweiten, vierten und fünften Ansteuerung jeweils ein Beleuchtungselement 6b angeschaltet und drei dem angeschalteten Beleuchtungselement 6b folgende Beleuchtungselemente 6a ausgeschaltet werden und wobei die erste, zweite, vierte und fünfte Ansteuerung jeweils um zwei Beleuchtungselemente 6 versetzt ist. Bei einer dritten und sechsten Ansteuerung werden alle Beleuchtungselemente 6c vorzugsweise mit der bereits erwähnten verminderten Helligkeit angeschaltet. Die einzelnen Beleuchtungselemente 6 sind in diesem Beleuchtungszyklus nicht nur im Mittel gleichlang angeschaltet, sondern die Anschalt- und Pausenzeiten sind in diesem Beleuchtungszyklus für alle Beleuchtungselemente 6 in etwa gleich. Dies führt zu besonders ausgewogenen Detektionsbedingungen.

Wie durch die obersten beiden Zeilen der Darstellung angedeutet, ist die Beleuchtungseinrichtung 2 aus mehreren Modulen aufgebaut, die jeweils acht einzeln schaltbare Beleuchtungselemente 6 aufweisen, wobei ein Beleuchtungselement erfindungsgemäß auch aus mehreren, gemeinsam schaltbaren Beleuchtungskörpern (LED's) aufgebaut sein kann. Die modulare Bauweise der Beleuchtungseinrichtung 2 erleichtert eine flexible Anpassung an verschiedene Produktionslinien.

Ein weiterer, nicht dargestellter Beleuchtungszyklus stellt eine Weiterentwicklung des in Fig. 7 veranschaulichten Musters dar. Gegenüber dem in Fig. 7 gezeigten Zyklus entfällt nun die Ansteuerung, in der alle Beleuchtungselemente der Beleuchtungszeile mit verminderter Helligkeit angeschaltet werden. Stattdessen werden insgesamt vier Ansteuerungen realisiert, bei denen jeweils ein Beleuchtungselement angeschaltet ist und drei dem angeschalteten Beleuchtungselement folgende Beleuchtungselemente ausgeschaltet sind. Die zweite und die vierte Ansteuerung sind jeweils um zwei Beleuchtungselemente, die zweite Ansteuerung um ein Beleuchtungselement und die erste Ansteuerung um drei Beleuchtungselemente versetzt.

Die von der Aufnahmeeinrichtung im Bereich der angeschalteten Beleuchtungselemente über den gesamten Beleuchtungszyklus des Auflösungsbereichs aufgenommenen Aufnahmeelemente werden zu einer Zeile eines Hellfeldbildes des Gegenstands zusammengesetzt. Da die angeschalteten Beleuchtungselemente über den gesamten Beleuchtungszyklus die gesamte Breite des Auflösungsbereichs erfassen, wird auch ein entsprechend ausgewogenes Hellfeldbild erzeugt. Wie oben bereits erläutert wurde, können die Beleuchtungselemente dabei mit voller Helligkeit betrieben werden, so dass sich die Belichtungszeit über den gesamten Beleuchtungszyklus gesehen verkürzt.

Ferner wird jeweils nur das Aufnahmeelement für die Erstellung eines Dunkelfeldbildes herangezogen, welches durch das mittlere der drei ausgeschalteten Beleuchtungselemente erzeugt wurde. Die Aufnahmeelemente der vier Ansteuerungen werden zu einer Zeile des Dunkelfeldbildes des jeweiligen Auflösungsbereichs zu dem Gegenstand zusammengesetzt. Durch dieses Vorgehen wird, wie oben bereits dargelegt wurde, ein guter Kontrast im Dunkelfeldbild erzeugt, so dass auch durch diese Maßnahme eine Verkürzung der erforderlichen Belichtungszeit und somit eine schnellere Abtastung realisiert werden kann.

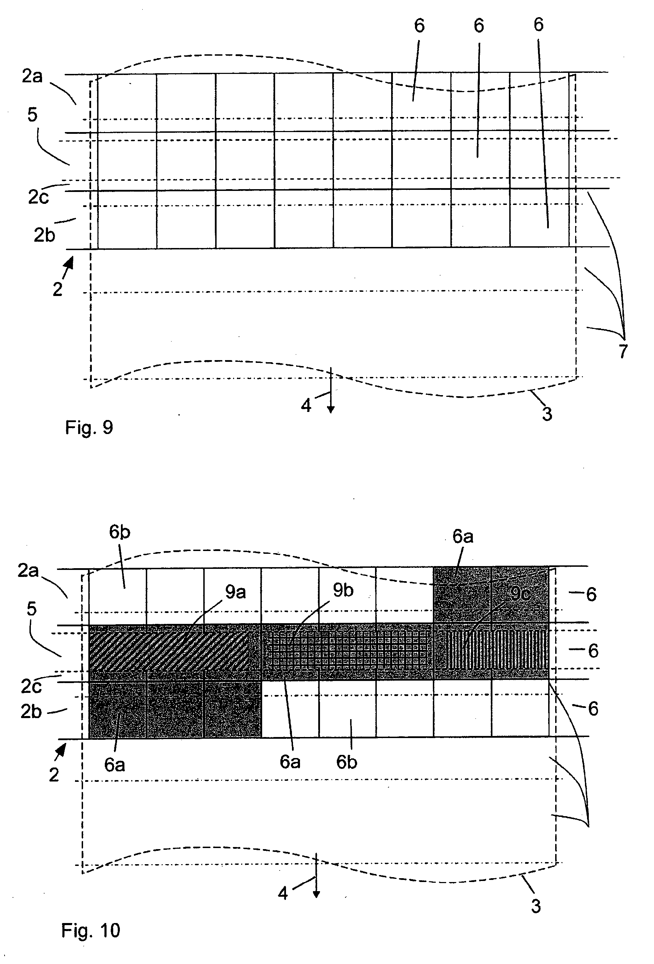

Fig. 9 zeigt eine weitere Ausführungsform der vorliegenden Erfindung, bei der die Beleuchtungseinrichtung 2 insgesamt drei Beleuchtungszeilen 2a, 2b und 2c jeweils mit Beleuchtungselementen 6 aufweist. Die Inspektionslinie 5 der Kamera, welche eine Aufnahme des Ausschnitts des Gegenstands 3 repräsentiert, befindet sich in der mittleren Beleuchtungszeile 2c. Die diesen umgebenden Beleuchtungszeilen 2a und 2b werden durch die Kamera 1 nicht erfasst. Im Übrigen entspricht die Anordnung gemäß Fig. 8 der erfindungsgemäßen Anordnung gemäß Fig. 3, wobei insbesondere verschiedene Teilstreifen 7a entsprechend der Inspektionslinie 5 aufgenommen werden können.

Fig. 10 verdeutlicht in einem Muster die Möglichkeiten zur Erzeugung verschiedener Dunkelfelder 9a, 9b, 9c mit einer seitlichen Beleuchtung in Transportrichtung 4. Dazu sind in der ersten Zeile 2a von der einen Seite her eine bestimmte Anzahl von Beleuchtungselementen 6b angeschaltet. Die letzten zwei Beleuchtungselemente der Beleuchtungszeile 2a sind dagegen ausgeschaltet, ohne dass hierin eine bevorzugte Anzahl von an- und ausgeschalteten Beleuchtungselementen 6b, 6a gesehen wird. In der zweiten Beleuchtungszeile 6c, welche durch die Aufnahmeeinrichtung 1 aufgenommen wird, sind alle Beleuchtungselemente 6a ausgeschaltet, so dass diese Beleuchtungszeile 2c ein die gesamte Breite des Gegenstands 3 überspannendes Dunkelfeld darstellt. In der letzten, die Beleuchtungszeile 2c auf der anderen Seite umgebenden Beleuchtungszeile 2b sind die ersten drei Beleuchtungselemente 6a ausgeschaltet und die verbleibenden Beleuchtungselemente 6b der Beleuchtungszeile 2b angeschaltet, wobei auch hier die Anzahl der an- und abgeschalteten Beleuchtungselemente 6b, 6a keine erfindungsgemäß bevorzugte Konfiguration darstellt.

Dieses Muster gemäß Fig. 10 wurde vielmehr gewählt, um die verschiedenen Dunkelfelder 9a, 9b und 9c zu erläutern, welche sich durch die Beleuchtungseinrichtung 2 mit drei Beleuchtungszeilen 2a, 2b, 2c erreichen lassen. Das Dunkelfeld 9a stellt eine Dunkelfeldanordnung mit einer Beleuchtung in Transportrichtung 4 von hinten dar. Das Dunkelfeld 9b zeigt eine beidseitige Beleuchtung von vorne und hinten und das Dunkelfeld 9c zeigt eine Beleuchtung einseitig von vorne, jeweils in Transportrichtung 4. Diese Anordnungen ermöglichen das Erzeugen von Hell- und Dunkelfeldern auch in einer anderen Beleuchtungsrichtung, um Kratzer auch quer zur Transportrichtung feststellen zu können.

Zur Vereinfachung der Schaltung können bei der erfindungsgemäßen Einrichtung unabhängig von der konkreten Ausbildung der Beleuchtungseinrichtung 2 auch die Beleuchtungselemente 6, die ihrerseits aus einer Gruppe einzelner Beleuchtungskörper (wie beispielsweise LED's) bestehen können, gruppenweise geschaltet werden, da bei den Beleuchtungszyklen vorzugsweise immer die gleichen Muster durchgeschaltet werden.

In Fig. 11 ist eine weitere Ausführungsform der Erfindung dargestellt, die der ersten, in Fig. 1 dargestellten Ausführungsform, ähnelt. Sie zeigt eine erfindungsgemäße Einrichtung mit einer insbesondere als Zeilenkamera ausgebildeten optischen Aufnahmeeinrichtung 1 und einer Beleuchtungseinrichtung 2, die aus einer Beleuchtungszeile 2c mit nebeneinander angeordneten Beleuchtungselementen 6 aufgebaut ist. Es handelt sich um eine Durchlichtanordnung, bei der die Aufnahmeeinrichtung 1 und die Beleuchtungseinrichtung 2 auf verschiedenen Seiten eines transparenten Gegenstands 3, hier insbesondere ein Strukturglasband, angeordnet sind. Das Strukturglasband 3 wird durch eine hier als Rollen symbolisierte Transporteinrichtung 10 bewegt.

Fig. 11 zeigt eine Ansicht der Einrichtung in Transportrichtung 4, bei der von der Seite auf die Aufnahmeeinrichtung 1 und die Beleuchtungseinrichtung 2 gesehen wird. Von der senkrecht zu Transportrichtung 4 angeordneten Beleuchtungszeile 2c ist daher nur ein Beleuchtungselement 6 dargestellt.

Bei dieser Ausführungsform, die besonders gut für die Untersuchung von Strukturglas verwendet werden kann, ist zwischen der Beleuchtungseinrichtung 2 und dem zu überprüfenden Strukturglas (Gegenstand 3) eine optische Lichtformungseinheit 11 angeordnet, die als Einheit eine zylindrische Fresnel-Linse 12 und einen Diffusor 13 aufweist. Der Diffusor 13 ist benachbart zu der Fresnel-Linse 12, d.h. vorzugsweise unmittelbar neben der Fresnel-Linse 12, zwischen der Fresnel-Linse 12 und der Beleuchtungseinrichtung 2 angeordnet.

Die Brennweite der Fresnel-Linse 12 und die Position der Lichtformungseinheit 11 zwischen der Beleuchtungseinrichtung 2 und dem zu überprüfenden Gegenstand 3 wird derart gewählt, dass das von der Beleuchtungseinrichtung 2 ausgestrahlte und durch die Lichtformungseinheit 11 erfasste Licht zumindest auf den beleuchteten Bereich 5, d.h. die durch die Aufnahmeeinrichtung 1 erfasste Inspektionslinie, projiziert wird. Dieser in der Praxis auch in Transportrichtung 4 ausgedehnte Bereich 5 ist in Fig. 11 strichförmig dargestellt. Der Strahlengang des Lichts ist als Lichtkegel 14 skizziert.

Durch die Fresnel-Linse 12 wird die Beleuchtungseinrichtung 2 in Transportrichtung 4 optisch verbreitert und das Licht der Beleuchtungseinrichtung 2 dann auf die Breite des beleuchteten und inspizierten Bereichs 5 fokussiert. Hierdurch wird das von der Beleuchtungseinrichtung 2 ausgestrahlte Licht in allen Richtungen homogenisiert. Dies ist für das Auffinden von Fehlern in einem Hellfeld besonders wichtig. Dennoch schaut die optische Aufnahmeeinrichtung 1 immer in die möglichst schmale Projektion der Beleuchtungszeile 2c auf dem Strukturglas.

Für die Dunkelfeldbeleuchtung ist dagegen eine eher gerichtete Beleuchtung senkrecht zur Transportrichtung 4 nötig, wobei die Grenzen zwischen den beleuchteten und den nicht beleuchteten Abschnitten des beleuchteten Bereichs 5 möglichst scharf sein müssen. Die beleuchteten bzw. die nicht beleuchteten Abschnitte werden durch angeschaltete bzw. abgeschaltete Beleuchtungselemente 6b bzw. 6a erzeugt.

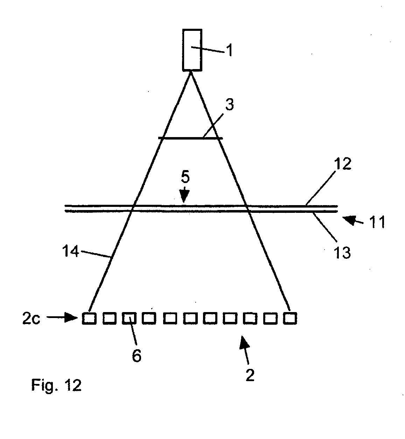

Wie Fig. 12 zu entnehmen, welche die Anordnung gemäß Fig.11 aus der Transportrichtung 4 zeigt, hat die Fresnel-Linse 12 senkrecht zur Transportrichtung 4 keine signifikante Wirkung. Insbesondere wird das Licht der verschiedenen, nebeneinander angeordneten Beleuchtungselemente 6 der Beleuchtungseinrichtung 2, durch die Fresnel-Linse 12 der Lichtformungseinheit 11 in dieser Richtung nicht homogenisiert, um für eine effektive Dunkelfeldbeleuchtung eine scharfe Grenze zwischen angeschalteten Beleuchtungselementen 6b und ausgeschalteten Beleuchtungselementen 6a zu erreichen.

Der Diffusor 13 homogenisiert das Licht insbesondere in Richtung der Beleuchtungszeile 6c etwas, ist erfindungsgemäß allerdings so schwach streuend ausgebildet, dass die Grenzen zwischen den einzelnen Beleuchtungselementen 6 nicht stark verschwimmen, was negativen Einfluss auf die Qualität der Dunkelfeldbeleuchtung hätte.

Diese in den Fig. 11 und 12 gezeigte Anordnung mit der optischen Lichtformungseinheit 11 ist für die Überprüfung von Strukturglas besonders geeignet.

In einem weiteren Ausführungsbeispiel kann eine erste Zeile von Beleuchtungselementen, z.B. LEDs, auf der einen (oberen) Seite des Gegenstands und eine zweite Zeile von Beleuchtungselementen, z.B. LEDs, auf der anderen (unteren) Seite des Gegenstands angeordnet werden. Beide Zeilen der Beleuchtungselemente bilden die Beleuchtungseinrichtung und sind unabhängig voneinander ansteuerbar. Gegebenenfalls sind auch die einzelnen Beleuchtungselemente jeder Zeile einzeln ansteuerbar. Die als Zeilenkamera ausgebildete Aufnahmeeinrichtung ist auf der Seite des Gegenstands angeordnet, auf der sich auch die erste Zeile von Beleuchtungselementen befindet. Alternativ zu einzelnen Beleuchtungselementen können auch Gruppen von Beleuchtungselementen verwendet werden, die auch als Beleuchtungseinheiten bezeichnet werden.

In Betrieb der Einrichtung werden die erste Zeile und die zweite Zeile von Beleuchtungselementen durch die Recheneinheit in einem Zyklus getrennt voneinander angeschaltet, wobei die Aufnahmefrequenz der Zeilenkamera derart gewählt wird, dass die durch die erste Zeile und die zweite Zeile von Beleuchtungselementen erzeugten Aufnahmen dem gleichen Auflösungsbereich entsprechen. Als Ergebnis wird durch die Zeilenkamera eine Rohaufnahme erzeugt, welche abwechselnd eine Zeile einer Aufnahme des Gegenstands in Reflexion und eine Zeile einer Aufnahme in Transmission enthält. In der Recheneinheit können die Daten mittels Multiplexings dann so getrennt werden, dass beispielsweise die Zeilen mit einer geraden Nummer einem ersten Bild und die Zeilen der Rohaufnahme mit einer ungeraden Nummer einem zweiten Bild zugeordnet werden. Das so erzeugte erste Bild enthält somit eine Aufnahme des bewegten Gegenstands in Reflexion und das zweite Bild eine Aufnahme in Transmission. Die beiden Bilder können sodann durch die Recheneinrichtung weiter zur Erkennung und/oder Klassifizierung von Fehlern einzeln oder kombiniert ausgewertet werden.

Analog zu der oben beschriebenen Ausführungsform können alternativ oder zusätzlich in einem weiteren Ausführungsbeispiel eine erste Zeile von Beleuchtungselementen unter einem ersten Winkel und eine zweite Zeile von Beleuchtungselementen unter einem zweiten Winkel Licht auf den bewegten Gegenstand aussenden, wobei die beiden Zeilen getrennt voneinander (z.B. nacheinander) angeschaltet werden und die Kamera Aufnahmen der beiden Beleuchtungskonfigurationen aus einem Auflösungsbereich erzeugt. Vorzugsweise realisieren die erste Zeile von Beleuchtungselementen und die zweite Zeile von Beleuchtungselementen jeweils eine Auflichtbeleuchtung. Wenn nun das mit dem erfindungsgemäßen Verfahren erzeugte erste Bild und das zweite Bild, welche die Eigenschaften des Gegenstands mit Beleuchtung unter unterschiedlichen Winkeln beinhalten, durch die Recheneinheit während der weiteren Auswertung voneinander abgezogen (subtrahiert) werden, können hierdurch Texturen auf einer Oberfläche unterdrückt werden, um diese von topologischen Fehlern zu unterscheiden.

In einem weiteren Ausführungsbeispiel umfasst die Beleuchtungseinrichtung drei Zeilen von Beleuchtungselementen in Durchlichtanordnung unter drei verschiedenen Winkeln zur Oberfläche des bewegten Gegenstands angeordnet sind. Hierbei werden die schräg zur Oberfläche angeordneten Beleuchtungselemente als Dunkelfeldbeleuchtungen und das etwa senkrecht zur Oberfläche des Gegenstands angeordnete Beleuchtungselement als Hellfeldbeleuchtung angesteuert. Hierdurch sieht die Kamera den Fehler auf/in dem Gegenstand unter drei verschiedenen Beleuchtungsverhältnissen, was insbesondere bei topologischen Fehlern von großem Vorteil für die Klassifikation des Fehlers ist. Auch diese Beleuchtungselemente werden zusammen mit der Aufnahmeeinrichtung so geschaltet, dass die entstehenden Aufnahmen in einem Auflösungsbereich liegen.

Eine weitere Ausführungsform der Erfindung entwickelt das in Fig. 11 dargestellte Ausführungsbeispiel weiter. Zwischen den Beleuchtungselementen 6, welche beispielsweise als eine LED-Zeile ausgebildet sind, wird ein Moiré-Gitter angeordnet, welches zusammen mit den Kamerapixeln ein Moiré-Effekt im Kamerabild erzeugt. Ferner sind weitere Beleuchtungselemente vorgesehen, welche eine LED-Zeile ausbilden, die auf der gleichen Seite des Gegenstands angeordnet ist wie die Kamera. Die Beleuchtungselemente, welche das den Gegenstand durchdringende Licht aussenden, werden so angesteuert, dass die Anordnung als Dunkelfeldanordnung wirkt. Demgegenüber bildet die LED-Zeile, die neben der Kamera auf derselben Seite des Gegenstands angeordnet ist, eine Hellfeldbeleuchtung. Durch diese Anordnung lassen sich insbesondere verzerrende Fehler erfassen.

In allen zuletzt genannten Anordnungen können alle oder mehrere der Beleuchtungselemente ihrerseits als schaltbare LED-Zeile ausgeführt sein.

### Bezugszeichenliste

- 1: optische Aufnahmeeinrichtung, Kamera
- 2: Beleuchtungseinrichtung
- 2a, 2b, 2c: Beleuchtungszeile
- 3: Gegenstand, transparentes Material
- 4: Transportrichtung
- 5: beleuchteter Bereich, Inspektionslinie
- 6: Beleuchtungselement, LED
- 7: Streifen, Auflösungsbereich
- 7a: Teilstreifen
- 8: Fehler
- 9: Dunkelfeld
- 10: Transporteinrichtung, Transportrollen
- 11: optische Lichtformungseinheit
- 12: zylindrische Fresnel-Linse
- 13: Diffusor
- 14: Lichtkegel

## Patentansprüche

1. Einrichtung zur optischen Überprüfung eines in einer Transportrichtung (4) bewegten Gegenstands (3) auf Fehler
mit einer Beleuchtungseinrichtung (2) zur Beleuchtung des bewegten Gegenstands (3), wobei die Beleuchtungseinrichtung (2) mehrere einzeln schaltbare Beleuchtungselemente (6) aufweist, welche in einer quer zur Transportrichtung ausgerichteten Beleuchtungszeile (2c) angeordnet sind,
mit einer optischen Aufnahmeeinrichtung (1) zur Aufnahme von Bildern der beleuchteten Bereiche (5) des Gegenstands sowie
mit einer Recheneinheit zur Ansteuerung der Beleuchtungseinrichtung (2) und der Aufnahmeeinrichtung (1) und zur Auswertung der aufgenommenen Bilder auf das Vorhandensein von Fehlern, wobei die Recheneinheit dazu eingerichtet ist, die einzeln schaltbaren Beleuchtungselemente (6) als Hellfeldbeleuchtung oder Dunkelfeldbeleuchtung zu schalten und die Beleuchtungselemente (6) in der Beleuchtungszeile (2c) gemäß einem vorgegebenen Beleuchtungszyklus zur Erzeugung verschiedener Beleuchtungsmuster anzusteuern, wobei die Recheneinheit weiter dazu eingerichtet ist, die Aufnahmefrequenz für die Aufnahmeeinrichtung (1) derart zu wählen, dass die Aufnahmeeinrichtung (1) in einem der gewünschten Auflösung in Transportrichtung (4) entsprechendem Auflösungsbereich (7) des Gegenstands (3) mehrere Aufnahmen macht, und aus den in dem Auflösungsbereich des Gegenstands erstellten mehreren Aufnahmen mindestens zwei Bilder des Gegenstands zusammenzusetzen und einzeln oder kombiniert auf das Vorhandensein von Fehlern auszuwerten.

2. Einrichtung nach Anspruch 1, **dadurch gekennzeichnet, dass** die Recheneinheit dazu eingerichtet ist, dass die Aufnahmeeinrichtung (1) in dem Auflösungsbereich drei, vier, fünf oder sechs Aufnahmen macht.

3. Einrichtung nach Anspruch 1, **dadurch gekennzeichnet,**
**dass** die Recheneinheit dazu eingerichtet ist, die Beleuchtungszeile (2c) in einem Beleuchtungszyklus dreimal anzusteuern, wobei bei einer ersten Ansteuerung die in der Nummerierung geraden Beleuchtungselemente (6b), bei einer zweiten Ansteuerung die jeweils ungeraden Beleuchtungselemente (6b) und bei einer dritten Ansteuerung alle Beleuchtungselemente (6c) angeschaltet werden, oder
**dass** die Recheneinheit dazu eingerichtet ist, die Beleuchtungszeile (2c) in einem Beleuchtungszyklus fünfmal anzusteuern, wobei bei einer ersten, zweiten, dritten und vierten Ansteuerung jeweils zwei aufeinander folgende Beleuchtungselemente (6b) angeschaltet und zwei den angeschalteten Beleuchtungselementen (6b) folgende Beleuchtungselemente (6a) ausgeschaltet werden und die erste, zweite, dritte und vierte Ansteuerung jeweils um ein Beleuchtungs-element (6) versetzt ist, und wobei bei einer fünften Ansteuerung alle Beleuchtungselemente (6c) angeschaltet werden,
oder
**dass** die Recheneinheit dazu eingerichtet ist, die Beleuchtungszeile (2c) in einem Beleuchtungszyklus viermal anzusteuern, wobei bei einer ersten, zweiten und dritten Ansteuerung jeweils ein Beleuchtungselement (6b) angeschaltet und zwei dem angeschalteten Beleuchtungselementen (6b) folgende Beleuchtungs-elemente (6a) ausgeschaltet werden und die erste, zweite und dritte Ansteuerung jeweils um ein Beleuchtungselement (6) versetzt ist, und wobei bei einer vierten Ansteuerung alle Beleuchtungselemente (6c) angeschaltet werden, oder
**dass** die Recheneinheit dazu eingerichtet ist, die Beleuchtungszeile in einem Beleuchtungszyklus viermal anzusteuern, wobei bei einer ersten, zweiten, dritten und vierten Ansteuerung jeweils ein Beleuchtungselement angeschaltet und drei dem angeschalteten Beleuchtungselement folgende Beleuchtungselemente ausgeschaltet werden und die zweite und die vierte Ansteuerung jeweils um zwei Beleuchtungselemente, die zweite Ansteuerung um ein Beleuchtungselement und die erste Ansteuerung um drei Beleuchtungselemente versetzt ist, oder
**dass** die Recheneinheit dazu eingerichtet ist, die Beleuchtungszeile (2c) in einem Beleuchtungszyklus dreimal anzusteuern, wobei bei einer ersten und zweiten Ansteuerung jeweils ein Beleuchtungselement (6b) angeschaltet und drei dem angeschalteten Beleuchtungselement (6b) folgende Beleuchtungselemente (6a) ausgeschaltet werden und die erste und zweite Ansteuerung um ein Beleuchtungselement (6) versetzt ist, und wobei bei einer dritten Ansteuerung alle Beleuchtungselemente (6c) angeschaltet werden, ,
oder
**dass** die Recheneinheit dazu eingerichtet ist, die Beleuchtungszeile (2c) in einem Beleuchtungszyklus sechsmal anzusteuern, wobei bei einer ersten, zweiten, vierten und fünften Ansteuerung jeweils ein Beleuchtungselement (6b) angeschaltet und drei dem angeschalteten Beleuchtungselement (6b) folgende Beleuchtungselemente (6a) ausgeschaltet werden und die erste, zweite, vierte und fünfte Ansteuerung jeweils um ein Beleuchtungselement (6) versetzt ist, und wobei bei einer dritten und sechsten Ansteuerung alle Beleuchtungselemente (6c) angeschaltet werden.

4. Einrichtung nach Anspruch 1, **dadurch gekennzeichnet, dass** die Beleuchtungselemente (6) der Beleuchtungseinrichtung (2) in mehreren quer zur Transportrichtung ausgerichteten Beleuchtungszeilen (2a, 2b,2c) angeordnet sind, wobei die Recheneinheit dazu eingerichtet ist, die Beleuchtungselemente (6) in den Beleuchtungszeilen (2a, 2b, 2c) gemäß einem vorgegebenen Beleuchtungszyklus anzusteuern.

5. Einrichtung nach Anspruch 4, **dadurch gekennzeichnet, dass** drei Beleuchtungszeilen (2a, 2b,2c) vorgesehen sind, wobei die Recheneinheit dazu eingerichtet ist, eine vorgegebene Anzahl von Beleuchtungselementen (6b) in der ersten Beleuchtungszeile (2a) von einem einen Ende der Beleuchtungszeile (2a) her anzuschalten, kein Beleuchtungselement (6a) in der zweiten Beleuchtungszeile (2c) anzuschalten und eine vorgegebene Anzahl von Beleuchtungselementen (6b) in der dritten Beleuchtungszeile (2b) von dem einen oder dem anderen Ende der Beleuchtungszeile (2b) her anzuschalten.

6. Einrichtung nach einem der vorhergehenden Ansprüche, **dadurch gekennzeichnet, dass** die Beleuchtungseinrichtung (2) und Aufnahmeeinrichtung (1) jeweils genau eine quer zur Transportrichtung des Gegenstands angeordnete, abzubildende Beleuchtungszeile (2c) bzw. Aufnahmezeile aufweisen, wobei die Aufnahmeeinrichtung (1) derart eingerichtet ist, dass die Aufnahmezeile der Aufnahmeeinrichtung die Beleuchtungszeile (2c) oder einen Ausschnitt dieser Beleuchtungszeile bei einer Aufnahme abbildet.

7. Einrichtung nach einem der vorhergehenden Ansprüche, **dadurch gekennzeichnet, dass** zwischen der Beleuchtungseinrichtung (2) und dem Gegenstand (3) und/oder dem Gegenstand (3) und der Aufnahmeeinrichtung (1) eine optische Lichtformungseinheit (11, 12, 13) und/oder ein Muster, insbesondere ein Moire-Gitter, angeordnet ist.

8. Einrichtung nach einem der vorhergehenden Ansprüche, **dadurch gekennzeichnet, dass** die Beleuchtungseinrichtung (2) mehrere unabhängig voneinander schaltbare Beleuchtungselemente aufweist, welche auf verschiedenen Seiten des bewegten Gegenstands (3) und/oder unter verschiedenen Winkeln zu dem bewegten Gegenstand (3) angeordnet sind und/oder Licht aus verschiedenen Wellenlängenbereichen aussenden.

9. Verfahren zur optischen Überprüfung eines in einer Transportrichtung (4) bewegten Gegenstands (3) auf Fehler unter Anwendung der Einrichtung gemäß einem der Ansprüche 1 bis 8, bei dem der Gegenstand (3) mit einer Beleuchtungseinrichtung (2) beleuchtet wird und bei dem die beleuchteten Bereiche (5) mit einer optischen Aufnahmeeinrichtung (1) aufgenommen und die aufgenommenen Bilder auf das Vorhandensein von Fehlern ausgewertet werden,
wobei die Beleuchtungseinrichtung (2) mehrere einzeln schaltbare Beleuchtungselemente (6) in einer oder mehreren quer zur Transportrichtung des Gegenstands angeordneten Beleuchtungszeilen (2a, 2b, 2c), aufweist, welche für mehreren Aufnahmen in einem Auflösungsbereich (7) unterschiedlich angesteuert werden, wobei die Beleuchtungselemente (2) in der einen Beleuchtungszeile (2c) oder den mehreren Beleuchtungszeilen (2a, 2b, 2c) gemäß einem vorgegebenen Beleuchtungszyklus zur Erzeugung verschiedener Beleuchtungsmuster angesteuert werden,
wobei die Aufnahmefrequenz von der gewünschten Auflösung in Transportrichtung (4) und der Geschwindigkeit des bewegten Gegenstands (3) abhängt und derart gewählt wird, dass die Aufnahmeeinrichtung (1) in einem der gewünschten Auflösung in Transportrichtung (4) entsprechendem Auflösungsbereich (7) des Gegenstands (3) mehrere Aufnahmen macht, wobei aus den in dem Auflösungsbereich des Gegenstands erstellten mehreren Aufnahmen mindestens zwei Bilder des Gegenstands zusammengesetzt und einzeln oder kombiniert auf das Vorhandensein von Fehlern ausgewertet werden.

10. Verfahren nach Anspruch 9, **dadurch gekennzeichnet, dass** die Aufnahmeeinrichtung (1) in dem Auflösungsbereich (7) drei, vier, fünf oder sechs Aufnahmen macht.

## Claims

1. Device for the optical inspection for defects of an object (3) which is moved in the direction of transport (4), comprising an illumination device (2) for illuminating the moving object (3), wherein the illumination device (2) comprising several individually switchable illumination elements (6) which are arranged in an illumination row (2c) aligned transverse to the direction of transport, with an optical imaging device (1) to record images of the illuminated areas (5) of the object and with a processing unit to control the illumination device (2) and the optical imaging device (1) and to analyze the recorded images for existence of defects, wherein the processing unit is configured to switch the individually switchable elements (6) to bright field illumination or dark field illumination and to trigger the row (2c) of illumination elements (6) according to a predefined illumination cycle in order to create different lighting patterns, wherein the processing unit is further configured to select the image rate of the imaging device (1) in such a way that the imaging device (1) records several images at a resolution range (7) of the object (3) which corresponds to the desired resolution in the direction of transport (4), and to combine at least two of the several images of the object recorded at the resolution range of the object and analyze them for existence of defects individually or in combination.

2. Device according to claim 1, **characterized in that** the processing unit is configured in such a way that the imaging device (1) records three, four, five or six images at the resolution range.

3. Device according to claim 1, **characterized in that** the processing unit is configured to trigger the illumination row (2c) three times in one illumination cycle, wherein during a first trigger the illumination elements (6b) with even numbers, during a second trigger the respective illumination elements (6b) with uneven numbers and during a third trigger all illumination elements (6c) are switched on
or
that the processing unit is configured to trigger the illumination row (2c) five times in one illumination cycle, wherein during a first, second, third and fourth trigger respectively two adjacent illumination elements (6b) are switched on and two illumination elements (6a) adjacent to the two switched on illumination elements (6b) are switched off, wherein the first, second, third and fourth trigger are offset by one illumination element (6) respectively, and wherein during a fifth trigger all illumination elements (6c) are switched on
or
that the processing unit is configured to trigger the illumination row (2c) four times in one illumination cycle, wherein during a first, second and third trigger respectively one illumination element (6b) is switched on and the two illumination elements (6a) adjacent to the switched on illumination element (6b) are switched off and the first, second and third trigger are offset by one illumination element (6) respectively, and wherein during a fourth trigger all illumination elements (6c) are switched on
or
that the processing unit is configured to trigger the illumination row (2c) four times in one illumination cycle, wherein during a first, second, third and fourth trigger respectively one illumination element is switched on and three illumination elements adjacent to the switched on illumination element are switched off and the second and the fourth trigger are offset by two illumination elements respectively, the second trigger by one illumination element and the first trigger by three illumination elements,
or
that the processing unit is configured to trigger the illumination row (2c) three times in one illumination cycle, wherein during a first and second trigger one illumination element (6b) is switched on and three illumination elements (6a) adjacent to the switched on illumination element (6b) are switched off and the first and second trigger are offset by one illumination element (6), and wherein during a third trigger all illumination elements (6c) are switched on,
or
that the processing unit is configured to trigger the illumination row (2c) six times in one illumination cycle, wherein during a first, second, fourth and fifth trigger respectively one illumination element (6b) is switched on and three illumination elements (6a) adjacent to the switched on illumination element (6b) are switched off and the first, second, fourth and fifth trigger are offset by one illumination element (6) respectively, and wherein during a third and sixth trigger all illumination elements (6c) are switched on.

4. Device according to claim 1, **characterized in that** the illumination elements (6) of the illumination device (2) are arranged in several illumination rows (2a, 2b, 2c) which are aligned transverse to the direction of transport, wherein the processing unit is configured to trigger the illumination elements (6) in the illumination rows (2a, 2b, 2c) according to a predefined illumination cycle.

5. Device according to claim 4, **characterized in that** three illumination rows (2a, 2b, 2c) are provided, wherein the processing unit is configured to switch on a predefined number of illumination elements (6b) in the first illumination row (2a) starting from one end of the illumination row (2a), no illumination element (6a) in the second illumination row (2c) and a predefined number of illumination elements (6b) in the third illumination row (2b) starting from one end of the illumination row (2b) or the other.

6. Device according to any one of the preceding claims, **characterized in that** the illumination device (2) and the imaging device (1) comprise exactly one illumination row (2c) an image of which is to be recorded or one recording row respectively, which are arranged transverse to the direction of transport of the object, wherein the imaging device (1) is configured in such a way that the recording row of the imaging device records an image of the illumination row (2c) or of a section of it during recording.

7. Device according to any one of the preceding claims, **characterized in that** an optical light shaping unit (11, 12, 13) and/or a pattern, specifically a Moiré grid, is arranged between the illumination device (2) and the object (3) and/or the object (3) and the imaging device (1).

8. Device according to any one of the preceding claims, **characterized in that** the illumination device (2) comprises several illumination elements that can be switched independently of one another and which are arranged on different sides of the moving object (3) and/or at different angles to the moving object (3) and/or emit light at different wavelength ranges.

9. Method for the optical inspection of an object (3) for defects which is moved in the direction of transport by applying the device according to one of the claims 1 to 8, wherein the object (3) is illuminated by an illumination device (2), the illuminated areas (5) are recorded by an optical imaging device (1) and the recorded images are analyzed for existence of defects, wherein the illumination device (2) comprises several individually switchable illumination elements (6) arranged in one or more illumination rows (2a, 2b, 2c) aligned transverse to the direction of transport of the object, which illumination rows are triggered differently for several images in one resolution range (7), wherein the illumination elements (2) in one illumination row (2c) or in the several illumination rows (2a, 2b, 2c) are triggered according to a predefined illumination cycle in order to create different lighting patterns, wherein the image rate depends on the desired resolution in the direction of transport (4) and the speed of the moving object (3) and is selected in such a way that the imaging device (1) records several images in a resolution range (7) which corresponds to the desired resolution in the direction of transport (4) of the object (3), wherein at least two of the several images of the object recorded in the resolution range of the object are combined and analyzed for existence of defects individually or in combination.

10. Method according to claim 9, **characterized in that** the imaging device (1) records three, four, five or six images in the resolution range (7).

## Revendications

1. Dispositif pour la vérification optique d'un objet (3) déplacé dans une direction de transport (4) quant à des erreurs,
avec un dispositif d'éclairage (2) pour éclairer l'objet (3) déplacé, dans lequel le dispositif d'éclairage (2) présente plusieurs éléments d'éclairage (6) pouvant être commutés individuellement, lesquels sont disposés dans une ligne d'éclairage (2c) orientée transversalement à la direction de transport,
avec un dispositif optique de prise de vue (1) pour la prise d'images des zones éclairées (5) de l'objet ainsi qu'avec une unité de calcul pour l'amorçage du dispositif d'éclairage (2) et du dispositif de prise de vue (1) et pour l'évaluation des images prises quant à la présence d'erreurs, dans lequel le dispositif de calcul est étudié pour commuter les éléments d'éclairage (6) commutables individuellement en tant qu'éclairage à fond clair ou éclairage à fond noir et pour amorcer les éléments d'éclairage (6) dans la ligne d'éclairage (2c) conformément à un cycle d'éclairage prescrit pour la génération de différents motifs d'éclairage, dans lequel l'unité de calcul est en outre étudiée pour choisir la fréquence de prise de vue pour le dispositif de prise de vue (1) de manière à ce que le dispositif de prise de vue (1) effectue plusieurs prises de vue dans une plage de résolution (7) de l'objet (3) correspondant à la résolution souhaitée en direction de transport (4), et pour assembler au moins deux images de l'objet à partir des plusieurs prises de vue de l'objet effectuées dans la plage de résolution, et les évaluer individuellement ou de manière combinée quant à la présence d'erreurs.

2. Dispositif selon la revendication 1, **caractérisé en ce que** l'unité de calcul est étudiée de manière à ce que le dispositif de prise de vue (1) effectue trois, quatre, cinq ou six prises de vue dans la plage de résolution.

3. Dispositif selon la revendication 1, **caractérisé en ce que** l'unité de calcul est étudiée pour amorcer trois fois la ligne d'éclairage (2c) dans un cycle d'éclairage, dans lequel, lors d'un premier amorçage, les éléments d'éclairage (6b) de numérotation paire sont allumés, lors d'un deuxième amorçage, les éléments d'éclairage (6b) respectivement impairs étant amorcés et lors d'un troisième amorçage, tous les éléments d'éclairage (6c) étant amorcés,
ou bien **en ce que** l'unité de calcul est étudiée pour amorcer cinq fois la ligne d'éclairage (2c) dans un cycle d'éclairage, dans lequel, lors d'un premier, deuxième, troisième et quatrième amorçage, respectivement deux éléments d'éclairage (6b) successifs sont allumés et deux éléments d'éclairage (6a) suivant les éléments d'éclairage allumés (6b) étant éteints et les premier, deuxième, troisième et quatrième amorçages étant respectivement d'écalés de l'ordre d'un élément d'éclairage (6) et dans lequel, lors d'un cinquième amorçage, tous les éléments d'éclairage (6c) sont allumés,
ou bien **en ce que** l'unité de calcul est étudiée pour amorcer quatre fois la ligne d'éclairage (2c) dans un cycle d'éclairage, dans lequel lors d'un premier, deuxième et troisième amorçage, respectivement un élément d'éclairage (6b) est allumé et deux éléments d'éclairage (6a) suivant l'élément d'éclairage allumé (6b) sont éteints et **en ce que** les premier, deuxième et troisième amorçages sont respectivement décalés de l'ordre d'un élément d'éclairage (6) et dans lequel, lors d'un quatrième amorçage, tous les éléments d'éclairage (6c) sont allumés,
ou bien **en ce que** l'unité de calcul est étudiée pour amorcer quatre fois la ligne d'éclairage dans un cycle d'éclairage, dans lequel, lors d'un premier, deuxième, troisième et quatrième amorçage, respectivement un élément d'éclairage est allumé et trois éléments d'éclairage suivant l'élément d'éclairage allumé sont éteints et les deuxième et quatrième amorçages étant respectivement décalés de l'ordre de deux éléments d'éclairage, le deuxième amorçage étant décalé de l'ordre d'un élément d'amorçage et le premier amorçage étant décalé de l'ordre de trois éléments d'éclairage,
ou bien **en ce que** l'unité de calcul est étudiée pour amorcer trois fois la ligne d'éclairage (2c) dans un cycle d'éclairage, dans lequel, lors d'un premier et d'un deuxième amorçage, respectivement un élément d'éclairage (6b) est allumé et trois éléments d'éclairage (6a) suivant l'élément d'éclairage allumé (6b) sont éteints, et les premier et deuxième amorçages étant décalés de l'ordre d'un élément d'éclairage (6), et dans lequel lors d'un troisième amorçage, tous les éléments d'éclairage (6c) sont allumés,
ou bien **en ce que** l'unité de calcul est étudiée pour amorcer six fois la ligne d'éclairage (2c) dans un cycle d'éclairage, dans lequel, lors d'un premier, deuxième, quatrième et cinquième amorçage, respectivement un élément d'éclairage (6b) est allumé et trois éléments d'éclairage (6a) suivant l'élément d'éclairage allumé (6b) sont éteints et les premier, deuxième, quatrième et cinquième amorçages étant respectivement décalés de l'ordre d'un élément d'éclairage (6), et dans lequel lors d'un troisième et sixième amorçage, tous les éléments d'éclairage (6c) sont allumés.

4. Dispositif selon la revendication 1, **caractérisé en ce que** les éléments d'éclairage (6) du dispositif d'éclairage (2) sont disposés dans plusieurs lignes d'éclairage (2a, 2b, 2c) orientées transversalement à la direction de transport, dans lequel l'unité de calcul est étudiée pour amorcer les éléments d'éclairage (6) dans les lignes d'éclairage (2a, 2b, 2c) conformément à un cycle d'éclairage prescrit.

5. Dispositif selon la revendication 4, **caractérisé en ce que** l'on prévoit trois lignes d'éclairage (2a, 2b, 2c), dans lequel l'unité de calcul est étudiée pour allumer un nombre prescrit d'éléments d'éclairage (6b) dans la première ligne d'éclairage (2a) à partir de l'une des extrémités de la ligne d'éclairage (2a), pour n'allumer aucun élément d'éclairage (6a) dans la deuxième ligne d'éclairage (2c) et pour allumer un nombre prescrit d'éléments d'éclairage (6b) dans la troisième ligne d'éclairage (2b) à partir de l'une ou de l'autre extrémité de la ligne d'éclairage (2b).

6. Dispositif selon l'une des revendications précédentes, **caractérisé en ce que** le dispositif d'éclairage (2) et le dispositif de prise de vue (1) présentent respectivement très exactement une ligne d'éclairage (2c) ou ligne de prise de vue à reproduire, disposée transversalement à la direction de transport de l'objet, dans lequel le dispositif de prise de vue (1) est étudié de manière à ce que la ligne de prise de vue du dispositif de prise de vue reproduise la ligne d'éclairage (2c) ou un extrait de cette ligne d'éclairage lors d'une prise de vue.

7. Dispositif selon l'une des revendications précédentes, **caractérisé en ce que**, entre le dispositif d'éclairage (2) et l'objet (3) et/ou l'objet (3) et le dispositif de prise de vue (1), une unité optique de formation de lumière (11, 12, 13) et/ou un motif, en particulier une grille moiré, sont mis en place.

8. Dispositif selon l'une des revendications précédentes, **caractérisé en ce que** le dispositif d'éclairage (2) présente plusieurs éléments d'éclairage commutables indépendamment les uns des autres, lesquels sont disposés sur différents côtés de l'objet (3) déplacé et/ou sont disposés selon différents angles par rapport à l'objet déplacé (3) et/ou émettent de la lumière de différentes plages de longueurs d'onde.

9. Procédé pour la vérification optique d'un objet (3) déplacé dans une direction de transport (4) quant à des erreurs en utilisant le dispositif selon l'une des revendications 1 à 8, dans lequel l'objet (3) est éclairé avec un dispositif d'éclairage (2) et dans lequel les zones éclairées (5) font l'objet d'une prise de vue avec un dispositif optique de prise de vue (1) et les images prises étant évaluées quant à la présence d'erreurs,
dans lequel le dispositif d'éclairage (2) présente plusieurs éléments d'éclairage (6) commutables individuellement disposés dans une ou plusieurs lignes d'éclairage (2a, 2b, 2c) disposées transversalement à la direction de transport de l'objet, lesquels sont amorcés différemment pour plusieurs prises de vue dans une plage de résolution (7), dans lequel les éléments d'éclairage (2) dans l'une des lignes d'éclairage (2c) ou ces plusieurs lignes d'éclairage (2a, 2b, 2c) sont amorcés conformément à un cycle d'éclairage prescrit pour la génération de différents motifs d'éclairage, dans lequel la fréquence de prise de vue dépend de la résolution souhaitée en direction de transport (4) et de la vitesse de l'objet (3) déplacé et est choisie de manière à ce que le dispositif de prise de vue (1) effectue plusieurs prises de vue dans une plage de résolution (7) de l'objet (3) correspondant à la résolution souhaitée en direction de transport (4), dans lequel, à partir des plusieurs prises de vue effectuées dans la plage de résolution de l'objet, au moins deux images de l'objet sont assemblées et sont évaluées individuellement ou de manière combinée quant à la présence d'erreurs.

10. Procédé selon la revendication 9, **caractérisé en ce que** le dispositif de prise de vue (1) effectue trois, quatre, cinq ou six prises de vue dans la plage de résolution (7).
